# EUROPÄISCHE PATENTSCHRIFT

(11) **EP 3 402 695 B1**
(45) Veröffentlichungstag und Bekanntmachung des Hinweises auf die Patenterteilung: **30.06.2021**
(21) Anmeldenummer: 16798174.5
(22) Anmeldetag: 18.11.2016
(51) Int. Cl.: B60Q 3/64, B60Q 3/78, B60Q 1/32, B29C 45/14, B60R 13/02, G09F 13/04, G09F 13/08, G09F 21/04, F21Y 101/00, G09F 13/18, F21S 45/50, F21V 8/00

(54) **BAUTEIL UMFASSEND EIN FLÄCHIGES DEKORELEMENT UND EIN GEHÄUSE**
COMPONENT COMPRISING A FLAT DECORATIVE ELEMENT AND A HOUSING
PARTIE STRUCTURALE COMPORTANT UN ÉLÉMENT DÉCORATIF PLAN ET UN BOÎTIER

(30) Priorität: 14.01.2016 EP 16151297
(43) Veröffentlichungstag der Anmeldung: 21.11.2018
(73) Patentinhaber: WEIDPLAS GmbH, 8630 Rüti (CH)
(72) Erfinder: STÖSSEL, Marcel, 8722 Kaltbrunn (CH); JAKOPIC, Klemen, 8645 Jona (CH); DAL VECCHIO, Enrico, 8734 Ermenswil (CH); ZWEIFEL, Peter, 8808 Pfäffikon (CH)
(74) Vertreter: Rutz, Andrea
(86) Internationale Anmeldenummer: PCT/EP2016/078144
(87) Internationale Veröffentlichungsnummer: WO 2017/121516

(56) Entgegenhaltungen:
- EP-A1- 1 691 131
- WO-A1-2009/075924
- WO-A1-2011/103692
- WO-A1-2015/109216
- DE-A1-102010 011 544
- DE-A1-102014 003 527
- DE-U1-202015 104 364
- JP-A- H10 282 911
- JP-A- 2007 329 089
- US-A1- 2012 281 151
- US-A1- 2014 063 844

## Beschreibung

### TECHNISCHES GEBIET

Die vorliegende Erfindung betrifft ein Bauteil, insbesondere ein Bauteil für ein Fahrzeug.

### STAND DER TECHNIK

Das Dokument DE 10 2010 036 795 A1 offenbart eine Verkleidungseinrichtung für ein Kraftfahrzeug mit integriertem Beleuchtungssystem und ein Verfahren zu dessen Herstellung. Bei der Herstellung des Beleuchtungssystems wird eine Beleuchtungseinheit mit einer applizierten Klebeschicht in eine vorgefertigte Vertiefung eines Trägers eingelegt. Die Klebeschicht dient zur Fixierung der Beleuchtungseinheit in der Vertiefung. Alternativ wird zur Befestigung der Beleuchtungseinheit in der Vertiefung ein Sprühkleber auf den Boden der Vertiefung aufgetragen und danach die Beleuchtungseinheit in die Vertiefung eingelegt. Die Fixierung der Beleuchtungseinheit mittels einer Klebeschicht oder eines Sprühklebers ist aufwendig und teuer. Gemäss einer weiteren Variante wird die Beleuchtungseinheit nicht verklebt, sondern einfach in die Vertiefung eingelegt. Nachteilig ist hierbei, dass durch eine Relativbewegung der Beleuchtungseinheit bezüglich der Vertiefung Geräuschemissionen entstehen können. Um eine Relativbewegung der Beleuchtungseinheit bezüglich der Vertiefung möglichst zu vermeiden, muss die Beleuchtungseinheit möglichst passgenau zur Vertiefung sein. Die Herstellung einer solchen Beleuchtungseinheit und einer entsprechenden Vertiefung ist sehr aufwendig und teuer. Die Bewegung der Beleuchtungseinheit führt zudem dazu, dass die Ausleuchtung der Verkleidungseinrichtung ungleichmässig wird. Dies ist insbesondere dann der Fall, wenn die Beleuchtungseinheit aus einem Lichtleiter und einem Leuchtmittel, wie z.B. einer LED gebildet ist, und somit der Lichtleiter sich relativ zum Leuchtmittel bewegen kann, welche Licht in den Lichtleiter einkoppelt.

DE 10 2010 036 795 A1 beschreibt des Weiteren, dass an der Beleuchtungseinheit ein Anschlusskabel befestigt ist, um die genannte Beleuchtungseinheit mit elektrischem Strom zu versorgen, wobei das Anschlusskabel über einen Durchbruch im Gehäuse aus dem Gehäuse bzw. aus der Verkleidungseinrichtung herausgeführt wird. Nachteilig bei dieser Lösung ist, dass Verschmutzungen, wie beispielsweise Flüssigkeiten oder Feststoffe, über den Durchbruch in das Gehäuse, insbesondere in einen Spalt zwischen der Beleuchtungseinheit und dem Gehäuse gelangen können. Insbesondere, falls die Beleuchtungseinheit aus einem Lichtleiter und einem Leuchtmittel, wie z.B. einer LED, gebildet ist, können Verschmutzungen, beispielweise in einen Spalt zwischen Lichtleiter und Gehäuse, in einen Spalt zwischen Lichtleiter und Leuchtmittel oder in einen Spalt zwischen Leuchtmittel und Gehäuse gelangen, so dass die Ausleuchtung der Verkleidungseinrichtung beeinträchtigt ist.

Weitere gattungsgemässe Bauteile sind in der DE 10 2010 011 544 A1, in der JP H10 282911 A2, in der DE 20 2015 104364 U1 sowie in der JP 2007 329089 A offenbart.

### DARSTELLUNG DER ERFINDUNG

Es ist also eine Aufgabe der vorliegenden Erfindung ein Bauteil zu schaffen, welches einfacher herstellbar, funktionssicherer und zudem vorteilhaft geräuschemissionsarm ist.

Zur Lösung dieser Aufgabe wird ein Bauteil vorgeschlagen, wie dieses in Anspruch 1 angegeben ist.

Die vorliegende Erfindung stellt also ein Bauteil zur Verfügung umfassend
- ein flächiges Dekorelement mit einer Sichtseite und einer Rückseite,
- eine aus einem ersten Material hergestellte Schicht oder mehrere aus ersten Materialien hergestellte Schichten, wobei die eine oder mehreren Schichten jeweils an der Rückseite des flächigen Dekorelementes angeordnet sind und jeweils eine Vorderseite und eine Hinterseite aufweisen, wobei die Vorderseite jeweils der Rückseite des flächigen Dekorelementes zugewandt ist, sowie
- ein aus einem zweiten Material hergestelltes Gehäuse mit einer Innenseite und einer Aussenseite, wobei die Innenseite den jeweiligen Hinterseiten der einen oder mehreren Schichten zugewandt ist,
wobei das oder die ersten Materialien Härten aufweisen, die jeweils unterschiedlich zur Härte des zweiten Materialessind,
und wobei das Gehäuse in wenigstens eine Vertiefung eingreift, die zumindest in einer der einen oder mehreren Schichten angeordnet ist.

Das Bauteil umfasst ausserdem wenigstens ein Leuchtmittel zur Einkopplung von Licht in wenigstens eine der wenigstens einen Schicht sowie wenigstens ein Stromübertragungselement, welches beispielsweise als wenigstens ein Anschlusskabel ausgebildet ist, zur Versorgung des Leuchtmittels mit elektrischem Strom. Bevorzugt ist das Leuchtmittel als punktförmiges Leuchtmittel ausgebildet. Dieses punktförmige Leuchtmittel ist beispielsweise eine Leuchtdiode. Das Leuchtmittel kann aber beispielsweise auch als Elektrolumineszenzfolie, OLED oder Glühbirne ausgebildet sein. Bevorzugt ist wenigstens ein Leuchtmittel, welches vorzugsweise als Leuchtdiode ausgebildet ist, auf einem Träger, beispielsweise auf einer Platine, befestigt. Bevorzugt bildet das Leuchtmittel mit dem Träger, dem Stromübertragungselement zur Versorgung des Leuchtmittels mit elektrischem Strom, sowie gegebenenfalls mit einer Elektronik, ein Beleuchtungsmodul.

Das Gehäuse weist zudem wenigstens einen Durchbruch auf, wobei die Innenseite des Gehäuses eine Eingangsöffnung des Durchbruches und die Aussenseite des Gehäuses eine Ausgangsöffnung des Durchbruches bildet. Das Stromübertragungselement erstreckt sich wenigstens durch den Durchbruch hindurch von der Innenseite zur Aussenseite des Gehäuses. Bevorzugt liegt das Material des Gehäuses unmittelbar dichtend an einem Abschnitt des Stromübertragungselementes an, welcher im Durchbruch angeordnet ist. Dies bewirkt den Vorteil, dass durch den Durchbruch keine Verschmutzungen, wie beispielsweise Flüssigkeiten oder Feststoffe, in das Bauteil gelangen können. Das Gehäuse weist auf der Innenseite wenigstens ein in Richtung der Hinterseite der Schicht gerichtetes Element in Form eines Dichtelements auf, welches in wenigstens eine in der Schicht angeordnete Vertiefung eingreift und welches die Eingangsöffnung des Durchbruches wenigstens teilweise, bevorzugt vollständig, bildet. Dies bietet den Vorteil, dass allfällige in den Durchbruch gelangende Verschmutzungen, wie Flüssigkeiten oder Feststoffe, insbesondere nicht zwischen die Hinterseite der Schicht und der Innenseite des Gehäuses gelangen können. Bevorzugt ist das Dichtelement unterhalb des Leuchtmittels oder des Beleuchtungsmoduls angeordnet. Dies bietet den Vorteil, dass das Risiko, dass das Dichtelement des Gehäuses, welches in die in der Schicht angeordnete Vertiefung eingreift, allfälliges sich innerhalb der Schicht fortpflanzendes Licht stört, vermindert ist. Weist beispielsweise das Bauteil einen Träger, wie beispielsweise eine Platine, mit einer Vorderseite und einer Rückseite auf, wobei die Vorderseite des Trägers der Rückseite des flächigen Dekorelementes zugewandt und wobei das Leuchtmittel auf der Vorderseite des Trägers angeordnet ist, so ist das Dichtelement bevorzugt im Bereich der Rückseite des Trägers sowie bevorzugt unterhalb der Rückseite des Trägers angeordnet. Die Gefahr, dass allfälliges vom Leuchtmittel oder vom Beleuchtungsmodul in die Schicht eingekoppeltes Licht durch das Dichtelement, welches in die Schicht eingreift, bei dessen Fortpflanzung in der Schicht gestört wird, ist vermindert.

Da das Gehäuse in wenigstens eine in zumindest einer der einen oder mehreren Schichten angeordnete Vertiefung eingreift, wird die Gefahr vermindert, dass die entsprechende zumindest eine Schicht sich relativ zum Gehäuse bewegen kann, bzw. dass das Gehäuse sich relativ zur entsprechenden Schicht bewegen kann. Durch diese Verbindung von Gehäuse und der zumindest einen Schicht ist das Bauteil einfacher herstellbar und bevorzugt gleichzeitig geräuschemissionsarm. Des Weiteren sind die Schicht und das Gehäuse auf diese Weise gut aneinander befestigbar. Aufgrund des Eingriffs der zumindest einen Schicht in das Gehäuse bzw. des Gehäuses in die zumindest eine Schicht wird zudem die Gefahr vermindert, dass Verschmutzungen, wie beispielsweise Flüssigkeiten oder Feststoffe, zwischen die Schicht und das Gehäuse gelangen können. Sind das Gehäuse und die Schicht gefügt, so können sich das Gehäuse und die Schicht in dem oder den Bereichen des gegenseitigen Eingriffs, aufgrund der unterschiedlichen Härten, besonders gut aneinander anschmiegen. Dadurch wird die Gefahr von Relativbewegungen zwischen dem Gehäuse und der entsprechenden Schicht weiter verringert, und es wird zudem eine besonders gute wenigstens teilweise Abdichtung eines allfälligen Raumes beziehungsweise Spaltes möglich, welcher zwischen der Innenseite des Gehäuses und der Hinterseite der Schicht angeordnet ist. Das erfindungsgemässe Bauteil ist somit verschmutzungssicherer und somit funktionssicherer als Bauteile des Standes der Technik.

Bevorzugt greift das Gehäuse in jede der einen oder mehreren Schichten ein, das heisst in jeder der Schichten ist wenigstens eine Vertiefung vorgesehen. Es kann aber auch nur eine einzelne oder eine gewisse Anzahl der einen oder mehreren Schichten in Eingriff mit dem Gehäuse stehen.

Wenn im Folgenden jeweils von "einer Schicht" oder von "der Schicht" die Rede ist, dann ist damit der Einfachheit halber, sofern nichts anderes angegeben ist, bevorzugt jeweils eine beliebige der einen oder mehreren Schichten gemeint. Bevorzugter ist jedoch eine Schicht der einen oder mehreren Schichten gemeint, welche in Eingriff mit dem Gehäuse steht. Noch bevorzugter sind alle Schichten der einen oder mehreren Schichten gemeint, welche in Eingriff mit dem Gehäuse stehen. Am bevorzugtesten sind jedoch sogar alle der einen oder mehreren Schichten gemeint. Die Ausdrücke "eine Schicht" und "die Schicht" können im Folgenden somit jeweils sowohl eine einzige Schicht als auch mehrere Schichten betreffen. Dasselbe gilt sinngemäss für die mit der Schicht in direktem Zusammenhang stehenden Ausdrücke, wie insbesondere "das erste Material", "die Vorderseite" und "die Hinterseite", welche je nachdem, ob eine einzige oder mehrere Schichten betroffen sind, entsprechend in der Einzahl oder in der Mehrzahl verstanden werden können.

Das Merkmal, dass das Dekorelement flächig ausgebildet ist, bedeutet, dass das Dekorelement entlang von zwei Dimensionen wesentlich grösser, insbesondere um ein Vielfaches grösser, dimensioniert ist als entlang einer dritten Dimension, welche sich in der Regel senkrecht zur Flächenausdehnung der Sichtseite des Dekorelementes erstreckt. Das flächige Dekorelement ist beispielsweise bandförmig, insbesondere als Band, ausgebildet.

Orts- und Richtungsangaben wie oben, unten, vertikal, horizontal, nach oben und nach unten sind im Folgenden jeweils in Bezug auf die Sichtseite des Bauteils zu verstehen. Dabei ist üblicherweise die Sichtseite des Bauteils oben und eine Rückseite des Bauteils unten angeordnet. In welcher Lage und Position das Bauteil in Bezug auf die Schwerkraftrichtung tatsächlich, wie zum Beispiel in einem Fahrzeug, montiert ist, ist hierbei unerheblich.

Nach einer Weiterbildung der Erfindung weist das Gehäuse wenigstens ein Element, welches als Dichtelement ausgebildet ist, auf, über welches das Gehäuse in wenigstens eine in der Schicht angeordnete Vertiefung eingreift. Das Element ist bevorzugt als Erhebung ausgebildet. Das Element ist im Querschnitt beispielsweise quadratisch, dreieckförmig oder in einer beliebig anderen Form ausgebildet. Bevorzugt weist das Element einen Hinterschnitt auf. Dies bietet den Vorteil, dass die Schicht und das Gehäuse besonders gut aneinander befestigt sind. Bevorzugt schmiegt sich das Material der Schicht an wenigstens einen Teilbereich einer Oberfläche des Elementes an, so dass eine gute wenigstens teilweise Abdichtung eines allfälligen zwischen der Hinterseite der Schicht sowie der Innenseite des Gehäuses angeordneten Raumes beziehungsweise Spaltes möglich ist. Besonders bevorzugt korrespondiert die Form wenigstens eines Abschnittes des Elementes mit der Form der Vertiefung in welche der Abschnitt des Elementes eingreift. Hierdurch ist eine besonders gute wenigstens teilweise Abdichtung eines allfälligen zwischen der Hinterseite der Schicht sowie der Innenseite des Gehäuses angeordneten Raumes beziehungsweise Spaltes möglich. Bevorzugt weist das Gehäuse einen Grundkörper sowie das wenigstens eine Element auf, wobei bevorzugt der Grundkörper mit dem Element einstückig verbunden ist. Der Grundkörper und das Element des Gehäuses können beispielsweise auch zweistückig ausgebildet sein, wobei das Element beispielsweise stoffschlüssig mit dem Grundkörper verbunden ist.

Nach einer Weiterbildung der Erfindung weist das zweite Material, aus welchem das Gehäuse hergestellt ist, eine Härte auf, welche grösser als die Härte des oder der ersten Materialien ist. Das oder die ersten Materialien weisen somit bevorzugt Härten auf, welche jeweils kleiner als die Härte des zweiten Materiales sind. In Bezug auf das Eingreifen des Gehäuses in die Schicht ergeben sich hierdurch wenigstens zwei Varianten:
Gemäss einer ersten, bevorzugten Variante wird die wenigstens eine Vertiefung, aufgrund der grösseren Härte des Gehäuses im Vergleich zur Härte der Schicht, beim Fügen des Gehäuses und der Schicht durch das Gehäuse in der Schicht generiert. Das Gehäuse greift dann während des Fügevorganges gleichzeitig in die Schicht ein. Beim Fügen der Schicht und dem Gehäuse wird somit das erste Material der Schicht durch das zweite Material des Gehäuses verdrängt und / oder verdichtet und / oder verformt, bevorzugt elastisch verformt, und hierdurch die Vertiefung in der Schicht generiert. Sind das Gehäuse und die Schicht gefügt, so schmiegt sich die Schicht, aufgrund deren geringeren Härte im Vergleich zur Härte des Gehäuses, besonders gut an das in die Vertiefung der Schicht eingreifende Gehäuse an und somit wird eine besonders gute wenigstens teilweise Abdichtung eines allfälligen Raumes beziehungsweise Spaltes möglich, welcher zwischen der Innenseite des Gehäuses und der Hinterseite der Schicht angeordnet ist. Zudem werden hierdurch das Gehäuse und die Schicht besonders gut aneinander befestigt. Eine besonders gute Abdichtung sowie Befestigung ist erzielbar, falls das Material der Schicht durch das Material des Gehäuses verformt, insbesondere elastisch verformt wird.

Gemäss einer zweiten Variante weist die Schicht bereits wenigstens eine vorgefertigte Vertiefung auf. Beim Fügen der Schicht und dem Gehäuse greift somit bei dieser zweiten Variante das Gehäuse in wenigstens eine in der Schicht bereits angeordnete, vorgefertigte Vertiefung ein. Es entsteht somit beim Fügen der Schicht und dem Gehäuse keine Vertiefung.

Selbstverständlich kann auch bei der zweiten Variante das erste Material der Schicht durch das zweite Material des Gehäuses zusätzlich noch verdrängt und / oder verdichtet und / oder verformt, bevorzugt elastisch verformt werden oder bei der ersten, bevorzugten Variante die Schicht zusätzlich wenigstens eine vorgefertigte Vertiefung aufweisen. Das Gehäuse und die Schicht können bei der zweiten Variante sowie der ersten, bevorzugten Variante über wenigstens eine vorgefertigte Vertiefung sowie über wenigstens eine während des Fügens generierte Vertiefung miteinander verbunden sein.

Nach einer Weiterbildung der Erfindung ist die wenigstens eine Vertiefung eine vorgefertigte Vertiefung.

Nach einer Weiterbildung der Erfindung ist das erste Material, aus welchem die Schicht hergestellt ist, durch das zweite Material, aus welchem das Gehäuse hergestellt ist, verdrängbar.

Nach einer Weiterbildung der Erfindung ist das erste Material, aus welchem die Schicht hergestellt ist, durch das zweite Material, aus welchem das Gehäuse hergestellt ist, verdichtbar.

Nach einer Weiterbildung der Erfindung ist das erste Material, aus welchem die Schicht hergestellt ist, durch das zweite Material, aus welchem das Gehäuse hergestellt ist, verformbar, insbesondere elastisch verformbar.

Falls das erste Material, aus welchem die Schicht hergestellt ist, durch das zweite Material, aus welchem das Gehäuse hergestellt ist, verdrängbar und / oder verdichtbar und / oder verformbar, insbesondere elastisch verformbar, ist, so kann durch die Auswahl der Härte des ersten Materiales, aus welchem die Schicht hergestellt ist, relativ zur Härte des zweiten Materiales, aus welchem das Gehäuse hergestellt ist, beim Fügen der Schicht und des Gehäuses, bei welchem das Gehäuse in die Schicht eingreift, ein definierter Spalt, welcher bevorzugt Luft enthält, zwischen der Hinterseite der Schicht und der Innenseite des Gehäuses eingestellt werden. Diese definierte Einstellung ist insbesondere vorteilhaft, falls die Schicht insbesondere zur Lichtleitung vorgesehen ist und somit aus einem transluzenten Material, insbesondere transparenten Material, hergestellt ist.

Nach einer Weiterbildung der Erfindung weist das erste Material, aus welchem die Schicht hergestellt ist, eine Härte auf, welche grösser als die Härte des zweiten Materiales ist, aus welchem das Gehäuse hergestellt ist.

Nach einer Weiterbildung der Erfindung ist das zweite Material, aus welchem das Gehäuse hergestellt ist, durch das erste Material, aus welchem die Schicht hergestellt ist, verdrängbar.

Nach einer Weiterbildung der Erfindung ist das zweite Material, aus welchem das Gehäuse hergestellt ist, durch das erste Material, aus welchem die Schicht hergestellt ist, verdichtbar.

Nach einer Weiterbildung der Erfindung ist das zweite Material, aus welchem das Gehäuse hergestellt ist, durch das erste Material, aus welchem die Schicht hergestellt ist, verformbar, insbesondere elastisch verformbar.

Falls das zweite Material, aus welchem das Gehäuse hergestellt ist, durch das erste Material, aus welchem die Schicht hergestellt ist, verdrängbar und / oder verdichtbar und / oder verformbar, insbesondere elastisch verformbar, ist, so kann durch die Auswahl der Härte des ersten Materiales, aus welchem die Schicht hergestellt ist, relativ zur Härte des zweiten Materiales, aus welchem das Gehäuse hergestellt ist, beim Fügen der Schicht und des Gehäuses, bei welchem die Schicht in das Gehäuse eingreift, ein definierter Spalt, welcher bevorzugt Luft enthält, zwischen der Hinterseite der Schicht und der Innenseite des Gehäuses eingestellt werden. Diese definierte Einstellung ist insbesondere vorteilhaft, falls die Schicht insbesondere zur Lichtleitung vorgesehen ist und somit aus einem transluzenten Material, insbesondere transparenten Material, hergestellt ist.

Nach einer Weiterbildung der Erfindung ist das Gehäuse aus Kunststoff, Metall, Glas oder Keramik, bevorzugt aus Kunststoff, hergestellt. Der Kunststoff umfasst bevorzugt wenigstens einen Thermoplasten und / oder wenigstens einen Duroplasten, bevorzugter wenigstens einen Thermoplasten. Der Thermoplast ist beispielsweise Acrylnitril-Butadien-Styrol (ABS), Polyamid (PA), Polymethylmethacrylat (PMMA), Polycarbonat (PC), Polyethylenterephthalat (PET), Polyethylen (PE), Polypropylen (PP), Polystyrol (PS), Polyetheretherketon (PEEK) oder Polyvinylchlorid (PVC). Ist das Gehäuse aus Kunststoff hergestellt, so wird die Härte des Kunststoffes des Gehäuses bevorzugt gemäss der Norm DIN EN ISO 2039-1 vom Juni 2003 gemessen. Bevorzugt weist der Kunststoff des Gehäuses eine Kugeleindruckhärte gemessen gemäss der Norm DIN EN ISO 2039-1 vom Juni 2003 im Bereich von 10-200 N/mm² (Newton / Quadratmillimeter) auf. Ein aus Kunststoff gefertigtes Gehäuse mit einer derartigen Härte ist sicher gegen Deformation und somit montagesicher. Zudem kann das Gehäuse, das aus einem Material hergestellt ist, welches eine Härte im genannten Bereich aufweist, zuverlässig in einen Bestandteil des Bauteils, wie beispielsweise die Schicht oder einen Diffusor, eingreifen, welcher aus einem Material, insbesondere aus einem Kunststoff, hergestellt ist, welches eine vergleichsweise geringere Härte aufweist. Der Kunststoff des Gehäuses ist bevorzugt lichtundurchlässig. Dies bietet den Vorteil, dass von einem Leuchtmittel des Bauteils ausgestrahltes Licht nicht über das Gehäuse aus dem Bauteil entweichen kann.

Nach einer Weiterbildung der Erfindung ist die Schicht aus Kunststoff oder Glas, bevorzugt aus Kunststoff, hergestellt. Der Kunststoff umfasst bevorzugt wenigstens einen Thermoplasten und / oder wenigstens einen Duroplasten und / oder wenigstens ein Elastomer, bevorzugter wenigstens einen Thermoplasten und / oder wenigstens ein Elastomer, noch bevorzugter wenigstens ein Elastomer. Der Thermoplast ist beispielsweise Acrylnitril-Butadien-Styrol (ABS), Polyamid (PA), Polymethylmethacrylat (PMMA), insbesondere ein PMMA-Block-Copolymer, Polycarbonat (PC), Polyethylenterephthalat (PET), Polyethylen (PE), Polypropylen (PP), Polystyrol (PS), Polyetheretherketon (PEEK) oder Polyvinylchlorid (PVC). Das Elastomer ist beispielsweise Silikon, insbesondere Silikonkautschuk.

Ist die Schicht aus Kunststoff hergestellt und umfasst der Kunststoff wenigstens einen Thermoplasten und / oder wenigstens einen Durplasten, bevorzugt wenigstens einen Thermoplasten, so wird die Härte des Kunststoffes der Schicht bevorzugt gemäss der Norm DIN EN ISO 2039-1 vom Juni 2003 gemessen. Bevorzugt weist der Kunststoff, umfassend wenigstens einen Thermoplasten und / oder wenigstens einen Duroplasten, bevorzugt wenigstens einen Thermoplasten, der Schicht eine Kugeleindruckhärte gemessen gemäss der Norm DIN EN ISO 2039-1 vom Juni 2003 im Bereich von 10-200 N/mm² auf.

Ist die Schicht aus Kunststoff hergestellt und umfasst der Kunststoff wenigstens ein Elastomer, bevorzugt Silikon, bevorzugter Silikonkautschuk, so wird die Härte des Kunststoffes der Schicht bevorzugt gemäss der Norm DIN ISO 7619-1 vom Februar 2012 gemessen. Bevorzugt weist der Kunststoff, umfassend wenigstens ein Elastomer, der Schicht eine Shore-A-Härte gemessen gemäss der Norm DIN ISO 7619-1 vom Februar 2012 im Bereich von 5-90 auf.

Falls die Schicht eine Kugeleindruckhärte im Bereich von 10-200 N/mm² oder eine Shore-A-Härte im Bereich von 5-90, insbesondere eine Shore-A-Härte im Bereich von 5-90, aufweist, wobei die Kugeleindruckhärte gemäss der Norm DIN EN ISO 2039-1 vom Juni 2003 gemessen ist und die Shore-A-Härte gemäss der Norm DIN EN ISO 7619-1 vom Februar 2012 gemessen ist, so schmiegt sich die Schicht besonders gut an einen Bestandteil des Bauteils an, wie beispielsweise das Gehäuse, eine weitere Schicht oder einen Diffusor, welcher aus einem vergleichsweise härteren Material, insbesondere aus einem vergleichsweise härteren Kunststoff, hergestellt ist als die Schicht und somit dichtet die Schicht besonders gut gegenüber dem Bestandteil des Bauteils, wie beispielsweise dem Gehäuse, der weiteren Schicht oder dem Diffusor, ab.

Das erste Material, bevorzugt ein Kunststoff, aus welchem die Schicht hergestellt ist, ist bevorzugt transluzent, insbesondere transparent, ausgebildet, so dass die Schicht lichtdurchlässig ist und insbesondere Licht leiten kann. Bevorzugt weist die Schicht beispielsweise an einer Hinterseite und / oder an einer Vorderseite eine Reflexionsschicht auf oder auf einer Hinterseite und / oder auf einer Vorderseite der Schicht sind Lichtumlenkstrukturen angeordnet, welche gegebenenfalls mit der Schicht einstückig verbunden sind, oder in einer Hinterseite und / oder in einer Vorderseite der Schicht sind Lichtumlenkstrukturen eingearbeitet. Die Reflexionsschicht bzw. die Lichtumlenkstrukturen bewirken eine definierte Auskoppelung von Licht aus der Schicht, welches sich innerhalb der Schicht, insbesondere durch Totalreflexion, fortpflanzt.

Falls die Schicht aus einem transluzenten Material, insbesondere transparenten Material, hergestellt ist, so ist die Schicht bevorzugt aus Silikon oder PMMA-Block-Copolymer, bevorzugter aus Silikon, noch bevorzugter aus Silikonkautschuk, hergestellt. Die Verwendung von Silikon, insbesondere Silikonkautschuk, als Material zur Herstellung der Schicht weist den Vorteil auf, dass die Härte von Silikon, insbesondere Silikonkautschuk, gut einstellbar ist sowie Silikon, insbesondere Silikonkautschuk, eine niedrige Viskosität aufweist, so dass mittels Silikon, insbesondere Silikonkautschuk, feine Lichtumlenkstrukturen, herstellbar sind.

Nach einer Weiterbildung der Erfindung weist das zweite Material aus welchem das Gehäuse hergestellt ist eine Kugeleindruckhärte im Bereich von 10-200 N/mm² auf und das erste Material, aus welchem die Schicht hergestellt ist, weist eine Kugeleindruckhärte im Bereich von 10-200 N/mm² oder eine Shore-A-Härte im Bereich von 5-90, bevorzugt eine Shore-A-Härte im Bereich von 5-90, auf, wobei die Kugeleindruckhärte gemäss der Norm DIN EN ISO 2039-1 vom Juni 2003 gemessen ist und die Shore-A-Härte gemäss der Norm DIN ISO 7619-1 vom Februar 2012 gemessen ist. Im Falle, dass das Gehäuse ein höhere Härte aufweist als die Schicht, bietet dies den Vorteil, dass das Gehäuse optimal in die Schicht eingreifen und die Schicht sich optimal an den eingreifenden Bereich des Gehäuses anschmiegen kann. Diese Ausführungsform ist zudem besonders montagefreundlich. Im Falle, dass die Schicht ein höhere Härte aufweist als das Gehäuse, bietet dies den Vorteil, dass die Schicht optimal in das Gehäuse eingreifen und das Gehäuse sich optimal an den eingreifenden Bereich der Schicht anschmiegen kann. Diese Ausführungsform ist zudem besonders montagefreundlich.

Nach einer Weiterbildung der Erfindung ist zwischen der Hinterseite der Schicht und der Innenseite des Gehäuses ein Spalt, insbesondere ein mit Luft gefüllter Spalt, angeordnet. Dieser Spalt ist insbesondere vorteilhaft, falls die Schicht zur Leitung von Licht vorgesehen ist, welches bevorzugt zur Hinterleuchtung der Rückseite des flächigen Dekorelementes vorgesehen ist. Bevorzugt ist zwischen zwei unmittelbar zueinander benachbarten Schichten oder zwischen einer Schicht sowie einem Diffusor, welche unmittelbar zueinander benachbart sind, ebenfalls ein Spalt angeordnet. Dies ermöglicht eine verbesserte Lichtleitung innerhalb der Schicht.

Nach einer Weiterbildung der Erfindung greift das Gehäuse, bevorzugt das wenigstens eine Element des Gehäuses, welches als Dichtelement ausgebildet ist, unterbruchsfrei oder mit Unterbrüchen, bevorzugt unterbruchsfrei, in die wenigstens eine Vertiefung ein . Bevorzugt weist die Schicht und / oder das Gehäuse einen umlaufenden Randbereich auf, wobei das Gehäuse, bevorzugt das wenigstens eine Element des Gehäuses, welches als Dichtelement ausgebildet ist, unterbruchsfrei oder mit Unterbrüchen, bevorzugt unterbruchsfrei, entlang der Erstreckung des umlaufenden Randbereiches der Schicht in die Schicht eingreift. Besonders vorteilhaft sind die Ausführungsformen, bei welchen das wenigstens eine Element des Gehäuses unterbruchsfrei ausgebildet ist. Aufgrund der umlaufenden Ausbildung des Elementes wird wenigstens durch die Schicht sowie das Gehäuse, beziehungsweise wenigstens durch die Hinterseite der Schicht und die Innenseite des Gehäuses, ein zwischen wenigstens der Schicht und dem Gehäuses angeordneter abgeschlossener Raum gebildet, in welchen keine Verschmutzungen, wie beispielsweise Flüssigkeiten oder Feststoffe, eintreten können. Dies ist insbesondere vorteilhaft, falls die Schicht für die Lichtleitung vorgesehen ist, da durch allfällige Verschmutzungen, welche insbesondere an der Hinterseite der Schicht angeordnet sind, die Lichtleitung innerhalb der Schicht gestört wird. Der abgeschlossene Raum kann beispielsweise auch durch das Gehäuse, die Schicht sowie zusätzlich durch das flächige Dekorelement oder einem anderen Bestandteil des Bauteils gebildet sein. Noch vorteilhafter sind die Ausführungsformen, bei welchen das wenigstens eine Element des Gehäuses unterbruchsfrei ausgebildet ist sowie das Gehäuse in den Randbereich der Schicht eingreift. Diese Ausführungsformen weisen besonders grosse abgeschlossene Räume auf. Der abgeschlossene Raum ist bevorzugt wenigstens ein Teilbereich des zwischen der Hinterseite der Schicht und der Innenseite des Gehäuses angeordneten Spaltes.

Nach einer Weiterbildung der Erfindung weist die wenigstens eine Schicht wenigstens eine erste Schicht und ein zweite Schicht auf, welche bevorzugt übereinander angeordnet sind. Im Folgenden wird anhand der ersten und der zweiten Schicht beschrieben, wie zwei unmittelbar zueinander benachbarte Schichten einer Anordnung von wenigstens zwei Schichten, welche bevorzugt übereinander angeordnet sind, bevorzugt miteinander verbunden sind. Im Falle der erste Schicht und der zweiten Schicht greift die erste Schicht, beispielsweise über wenigstens ein Element, bevorzugt über wenigstens ein Dichtelement, in wenigstens eine in der zweiten Schicht angeordnete Vertiefung ein und / oder die zweite Schicht greift, beispielsweise über wenigstens ein Element, bevorzugt über wenigstens ein Dichtelement, in wenigstens eine in der ersten Schicht angeordnete Vertiefung ein. Weist beispielsweise die wenigstens eine Schicht, zusätzlich zur ersten Schicht und der zweiten Schicht, noch eine dritte Schicht auf, so greift beispielsweise in einem ersten Fall die dritte Schicht, beispielsweise über wenigstens ein Element, bevorzugt über wenigstens ein Dichtelement, in wenigstens eine in der ersten Schicht angeordnete Vertiefung ein und / oder die erste Schicht greift, beispielsweise über wenigstens ein Element, bevorzugt über wenigstens ein Dichtelement, in wenigstens eine in der dritten Schicht angeordnete Vertiefung ein. In einem zweiten, bevorzugten Fall, bei welchem die wenigstens eine Schicht, zusätzlich zur ersten Schicht und der zweiten Schicht, beispielsweise noch eine dritte Schicht aufweist, greift beispielsweise die dritte Schicht, beispielsweise über wenigstens ein Element, bevorzugt über wenigstens ein Dichtelement, in eine in der zweiten Schicht angeordnete Vertiefung ein und / oder die dritte Schicht greift, beispielsweise über wenigstens ein Element, bevorzugt über wenigstens ein Dichtelement, in wenigstens eine in der zweiten Schicht angeordnete Vertiefung ein. Auf diese Weise, wie anhand der ersten, zweiten und dritten Schicht beispielhaft beschrieben, können zwei oder mehre Schichten untereinander verbunden, insbesondere übereinander gestapelt und untereinander verbunden, werden. Zudem ist die Gefahr vermindert, dass die gestapelten Schichten sich relativ zueinander bewegen, insbesondere horizontal zueinander bewegen, können. Eine solche Anordnung vermindert die Gefahr der Geräuschemission des Bauteils. Des Weiteren ist eine solche Anordnung montagefreundlich. Das genannte Element, bevorzugt Dichtelement, der Schicht ist im Querschnitt beispielsweise quadratisch, dreieckförmig oder in einer beliebig anderen Form ausgebildet. Bevorzugt weist das Element einen Hinterschnitt auf. Dies bietet den Vorteil, dass die Schichten besonders gut aneinander befestigt sind.

Bevorzugt ist die Schicht, welche in eine weitere Schicht eingreift, aus einem ersten Material hergestellt, welches eine grössere Härte aufweist als das erste Material, aus welchem die weitere Schicht hergestellt ist. Somit weist beispielsweise das Material der ersten Schicht eine höhere Härte auf als das Material der zweiten Schicht oder das Material der zweiten Schicht weist eine höhere Härte auf als das Material der ersten Schicht. Dies bietet den Vorteil, dass die Schicht in die weitere Schicht eingreifen kann, indem das Material der Schicht das Material der weiteren Schicht verdrängt und / oder verdichtet und / oder verformt, bevorzugt elastisch verformt. Aufgrund der grösseren Härte der Schicht im Vergleich zur Härte der weiteren Schicht wird somit beim Fügen der Schicht und der weiteren Schicht durch die Schicht in der weiteren Schicht wenigstens eine Vertiefung generiert, in welche die Schicht während der Fügevorganges dann gleichzeitig eingreift. Sind die Schicht und die weitere Schicht gefügt, so schmiegt sich die weitere Schicht, aufgrund deren geringeren Härte im Vergleich zur Härte der Schicht, besonders gut an den in die weitere Schicht eingreifenden Bereich der Schicht an und somit wird eine besonders gute wenigstens teilweise Abdichtung eines allfälligen Raumes beziehungsweise Spaltes möglich, welcher zwischen der Vorderseite der Schicht und der Hinterseite der weiteren Schicht oder zwischen der Hinterseite der Schicht und der Vorderseite der weiteren Schicht angeordnet ist. Zudem werden hierdurch die Schicht und die weitere Schicht besonders gut aneinander befestigt. Eine besonders gute Abdichtung sowie Befestigung ist erzielbar, falls das Material der weiteren Schicht durch das Material der Schicht verformt, insbesondere elastisch verformt wird. Selbstverständlich kann wenigstens eine in der Schicht und / oder in der weiteren Schicht angeordnete Vertiefung auch eine vorgefertigte Vertiefung sein.

Bevorzugt ist zwischen der ersten Schicht und der zweiten Schicht ein Spalt, insbesondere ein mit Luft gefüllter Spalt, angeordnet. Dieser Spalt ist insbesondere vorteilhaft, falls die erste Schicht und / oder die zweite Schicht zur Leitung von Licht vorgesehen ist, welches bevorzugt zur Hinterleuchtung der Rückseite des flächigen Dekorelementes vorgesehen ist.

Bevorzugt greift die erste Schicht, bevorzugt das wenigstens eine Element der ersten Schicht, welches bevorzugt als Dichtelement ausgebildet ist, unterbruchsfrei oder mit Unterbrüchen, bevorzugt unterbruchsfrei, in die zweite Schicht ein und / oder die zweite Schicht, bevorzugt das wenigstens eine Element der zweiten Schicht, welches bevorzugt als Dichtelement ausgebildet ist, greift unterbruchsfrei oder mit Unterbrüchen, bevorzugt unterbruchsfrei, in die erste Schicht ein. Bevorzugt weist die erste Schicht und / oder die zweite Schicht einen umlaufenden Randbereich auf, wobei die erste Schicht, bevorzugt das wenigstens eine Element des Gehäuses, welches bevorzugt als Dichtelement ausgebildet ist, unterbruchsfrei oder mit Unterbrüchen, bevorzugt unterbruchsfrei, entlang der Erstreckung des umlaufenden Randbereiches der zweiten Schicht in die zweite Schicht eingreift und / oder dass die zweite Schicht, bevorzugt das wenigstens eine Element der zweiten Schicht, welches bevorzugt als Dichtelement ausgebildet ist, unterbruchsfrei oder mit Unterbrüchen, bevorzugt unterbruchsfrei, entlang der Erstreckung des umlaufenden Randbereiches ersten Schicht in die erste Schicht eingreift. Besonders vorteilhaft sind die Ausführungsformen, bei welchen das wenigstens eine Element der ersten Schicht und / oder der zweiten Schicht unterbruchsfrei ausgebildet ist. Aufgrund der umlaufenden Ausbildung des Elementes wird durch die erste Schicht sowie die zweite Schicht ein zwischen der ersten Schicht und der zweiten Schicht angeordneter abgeschlossener Raum gebildet, in welchen keine Verschmutzungen, wie beispielsweise Flüssigkeiten oder Feststoffe, eintreten können. Dies ist insbesondere vorteilhaft, falls die erste Schicht und / oder die zweite Schicht für die Lichtleitung vorgesehen ist, da durch allfällige Verschmutzungen, welche insbesondere zwischen der ersten Schicht und der zweiten Schicht angeordnet sind, die Lichtleitung innerhalb der erste Schicht und / oder zweiten Schicht gestört wird. Noch vorteilhafter sind die Ausführungsformen, bei welchen das wenigstens eine Element ersten Schicht und / oder der zweiten Schicht unterbruchsfrei ausgebildet ist sowie die erste Schicht in den Randbereich der zweiten Schicht eingreift und / oder die zweite Schicht in den Randbereich der ersten Schicht eingreift. Diese Ausführungsformen weisen besonders grosse abgeschlossene Räume auf. Der abgeschlossene Raum ist bevorzugt wenigstens ein Teilbereich des zwischen der ersten Schicht und der zweiten Schicht angeordneten Spaltes.

Nach einer Weiterbildung der Erfindung weist das Bauteil wenigstens einen Diffusor auf. Bevorzugt ist wenigstens eine Schicht der wenigstens einen Schicht als Diffusor ausgebildet. Der Diffusor bewirkt eine Lichtstreuung und insbesondere eine Vergleichmässigung von Licht. Der wenigstens eine Diffusor ist bevorzugt zwischen der Rückseite des flächigen Dekorelementes und der Vorderseite wenigstens einer der wenigstens einen Schicht angeordnet. Bevorzugt ist der Diffusor wenigstens bereichsweise an der Rückseite des flächigen Dekorelementes angespritzt.

Bevorzugt ist der Diffusor am Gehäuse befestigt. In diesem Fall ist das Gehäuse bevorzugt aus einem zweiten Material hergestellt, welches härter ist als das erste Material, aus welchem der Diffusor hergestellt ist. Gemäss einer weiteren Ausführungsform ist der Diffusor aus einem Material hergestellt, welches härter ist als das Material aus welchem das Gehäuse hergestellt ist. Bevorzugt greift das Gehäuse, beispielsweise über wenigstens ein Element, welches bevorzugt als Dichtelement ausgebildet ist, in wenigstens eine in wenigstens einem Diffusor des wenigstens einen Diffusors angeordnete Vertiefung ein und / oder der Diffusor greift, beispielsweise über wenigstens ein Element, welches bevorzugt als Dichtelement ausgebildet ist, in wenigstens eine in wenigstens einem Gehäuse des wenigstens einen Gehäuses angeordnete Vertiefung ein. Dies bietet den Vorteil, dass die Gefahr vermindert ist, dass sich das Gehäuse relativ zum Diffusor verschieben kann beziehungsweise dass sich der Diffusor relativ zum Gehäuse verschieben kann. Durch diese Anordnung kann das Bauteil geräuschemissionsarm ausgebildet werden. Das Element des Diffusors ist im Querschnitt beispielsweise quadratisch, dreieckförmig oder in einer beliebig anderen Form ausgebildet. Bevorzugt weist das Element des Diffusors und / oder des Gehäuses einen Hinterschnitt auf. Dies bietet den Vorteil, dass der Diffusor und das Gehäuse besonders gut aneinander befestigt sind.

Bevorzugt greift wenigstens eine Schicht der wenigstens einen Schicht, beispielsweise über wenigstens ein Element, welches bevorzugt als Dichtelement ausgebildet ist, in wenigstens eine in wenigstens einem Diffusor des wenigstens einen Diffusors angeordnete Vertiefung ein und / oder wenigstens ein Diffusor des wenigstens einen Diffusor greift, beispielsweise über wenigstens ein Element, welches bevorzugt als Dichtelement ausgebildet ist, in wenigstens eine in wenigstens einer Schicht der wenigstens einen Schicht angeordnete Vertiefung ein. Dies bietet den Vorteil, dass die Gefahr vermindert ist, dass sich die Schicht relativ zum Diffusor verschieben kann beziehungsweise dass sich der Diffusor relativ zur Schicht verschieben kann. Durch diese Anordnung kann das Bauteil geräuschemissionsarm ausgebildet werden. Das Element des Diffusors und / oder der Schicht ist im Querschnitt beispielsweise quadratisch, dreieckförmig oder in einer beliebig anderen Form ausgebildet. Bevorzugt weist das Element des Diffusors und / oder der Schicht einen Hinterschnitt auf. Dies bietet den Vorteil, dass die Schicht und der Diffusor besonders gut aneinander befestigt sind.

Bevorzugt ist zwischen der Schicht und dem Diffusor ein Spalt, insbesondere ein mit Luft gefüllter Spalt, angeordnet. Dieser Spalt ist insbesondere vorteilhaft, falls die Schicht und / oder der Diffusor zur Leitung von Licht vorgesehen ist, welches bevorzugt zur Hinterleuchtung der Rückseite des flächigen Dekorelementes vorgesehen ist.

Bevorzugt greift die Schicht, bevorzugt das wenigstens eine Element der Schicht, welches bevorzugt als Dichtelement ausgebildet ist, unterbruchsfrei oder mit Unterbrüchen, bevorzugt unterbruchsfrei, in den Diffusor ein und / oder der Diffusor, bevorzugt das wenigstens eine Element des Diffusors, welches bevorzugt als Dichtelement ausgebildet ist, greift unterbruchsfrei oder mit Unterbrüchen, bevorzugt unterbruchsfrei, in die Schicht ein. Bevorzugt weist die Schicht und / oder der Diffusor einen umlaufenden Randbereich auf, wobei die Schicht, bevorzugt das wenigstens eine Element der Schicht, welches bevorzugt als Dichtelement ausgebildet ist, unterbruchsfrei oder mit Unterbrüchen, bevorzugt unterbruchsfrei, entlang der Erstreckung des umlaufenden Randbereiches des Diffusors in den Diffusor eingreift und / oder dass der Diffusor, bevorzugt das wenigstens eine Element des Diffusors, welches bevorzugt als Dichtelement ausgebildet ist, unterbruchsfrei oder mit Unterbrüchen, bevorzugt unterbruchsfrei, entlang der Erstreckung des umlaufenden Randbereiches der Schicht in die Schicht eingreift. Besonders vorteilhaft sind die Ausführungsformen, bei welchen das wenigstens eine Element der Schicht und / oder des Diffusors unterbruchsfrei ausgebildet ist. Aufgrund der umlaufenden Ausbildung des Elementes wird durch die Schicht sowie den Diffusor ein zwischen der Schicht und dem Diffusor angeordneter abgeschlossener Raum gebildet, in welchen keine Verschmutzungen, wie beispielsweise Flüssigkeiten oder Feststoffe, eintreten können. Dies ist insbesondere vorteilhaft, falls die Schicht und / oder der Diffusor für die Lichtleitung vorgesehen ist, da durch allfällige Verschmutzungen, welche insbesondere zwischen der Schicht und dem Diffusor angeordnet sind, die Lichtleitung innerhalb der Schicht und / oder dem Diffusor gestört wird. Noch vorteilhafter sind die Ausführungsformen, bei welchen das wenigstens eine Element der Schicht und / oder des Diffusors unterbruchsfrei ausgebildet ist sowie die Schicht in den Randbereich des Diffusors eingreift und / oder der Diffusor in den Randbereich der Schicht eingreift. Diese Ausführungsformen weisen besonders grosse abgeschlossene Räume auf. Der abgeschlossene Raum ist bevorzugt wenigstens ein Teilbereich des zwischen der Schicht und dem Diffusor angeordneten Spaltes.

Falls die Schicht und der Diffusor aneinander befestigt sind, so kann beispielsweise die Schicht eine höhere Härte als der Diffusor aufweisen oder der Diffusor kann beispielsweise eine höhere Härte als die Schicht aufweisen.

Wenigstens ein Diffusor des wenigstens einen Diffusor ist bevorzugt aus Glas oder Kunststoff, bevorzugter aus Kunststoff, hergestellt. Der Kunststoff umfasst bevorzugt wenigstens einen Thermoplasten und / oder wenigstens einen Duroplasten und / oder wenigstens ein Elastomer, bevorzugter wenigstens einen Thermoplasten und / oder wenigstens ein Elastomer, noch bevorzugter wenigstens ein Elastomer. Der Thermoplast ist beispielsweise Polymethylmethacrylat (PMMA), PMMA-Block-Copolymer oder Polycarbonat (PC). Das Elastomer ist beispielsweise ein Silikon wie beispielsweise Silikonkautschuk.

Optional enthält das Material, insbesondere der Kunststoff, aus welchem der Diffusor hergestellt ist, lichtstreuende Partikel. Der Diffusor kann beispielsweise aber auch aus einem trüben Material, insbesondere aus einem trüben Kunststoff, wie beispielsweise einem Silikon, hergestellt sein. In diesem Fall bewirkt dann das trübe Material, wie beispielsweise das Silikon, des Diffusors die Lichtstreuung und es kann gegebenenfalls auf die Inkorporierung von lichtstreuenden Partikel in den Diffusor verzichtet werden.

Falls das Material, aus welchem der Diffusor hergestellt ist, wenigstens einen Thermoplasten und / oder wenigstens einen Durplasten, bevorzugt wenigstens einen Thermoplasten, umfasst, so wird die Härte des Materiales des Diffusors bevorzugt gemäss der Norm DIN EN ISO 2039-1 vom Juni 2003 gemessen.

Falls das Material, aus welchem der Diffusor hergestellt ist, wenigstens einen Thermoplasten und / oder wenigstens einen Durplasten, bevorzugt wenigstens einen Thermoplasten, umfasst, so liegt die Kugeleindruckhärte des Materiales aus welchem der Diffusor hergestellt ist, bevorzugt in einem Bereich von 10-200 N/mm² gemessen gemäss der Norm DIN EN ISO 2039-1 vom Juni 2003.

Falls das Material, aus welchem der Diffusor hergestellt ist, wenigstens ein Elastomer, wie beispielsweise Silikon, insbesondere Silikonkautschuk, umfasst, so wird die Härte des Materiales aus welchem der Diffusor hergestellt ist bevorzugt gemäss der Norm DIN ISO 7619-1 vom Februar 2012 gemessen.

Falls das Material, aus welchem der Diffusor hergestellt ist, wenigstens ein Elastomer, wie beispielsweise Silikon, insbesondere Silikonkautschuk, umfasst, so liegt die Shore-A-Härte des Materiales, aus welchem der Diffusor hergestellt ist, bevorzugt in einem Bereich von 5-90 gemessen gemäss der Norm DIN ISO 7619-1 vom Februar 2012.

Nach einer Weiterbildung der Erfindung weist das zweite Material, aus welchem das Gehäuse hergestellt, ist eine Kugeleindruckhärte im Bereich von 10-200 N/mm² auf und das Material, aus welchem der Diffusor hergestellt ist, weist eine Kugeleindruckhärte im Bereich von 10-200 N/mm² oder eine Shore-A-Härte im Bereich von 5-90, bevorzugt eine Shore-A-Härte im Bereich von 5-90, auf, wobei die Kugeleindruckhärte gemäss der Norm DIN EN ISO 2039-1 vom Juni 2003 gemessen ist und die Shore-A-Härte gemäss der Norm DIN ISO 7619-1 vom Februar 2012 gemessen ist. Weist das zweite Material, aus welchem das Gehäuse hergestellt ist, eine grössere Härte auf als das Material, aus welchem der Diffusor hergestellt ist, so bietet dies den Vorteil, dass das Gehäuse optimal in den Diffusor eingreifen und der Diffusor sich optimal an den in den Diffusor eingreifenden Bereich des Gehäuses anschmiegen kann. Diese Ausführungsform ist zudem besonders montagefreundlich.

Nach einer Weiterbildung der Erfindung weist das erste Material, aus welchem die Schicht hergestellt ist eine Kugeleindruckhärte im Bereich von 10-200 N/mm² oder eine Shore-A-Härte im Bereich von 5-90, bevorzugt eine Shore-A-Härte im Bereich von 5-90, auf, und das Material, aus welchem der Diffusors hergestellt ist, weist eine Kugeleindruckhärte im Bereich von 10-200 N/mm² oder eine Shore-A-Härte im Bereich von 5-90, bevorzugt eine Shore-A-Härte im Bereich von 5-90, auf, wobei die Kugeleindruckhärte gemäss der Norm DIN EN ISO 2039-1 vom Juni 2003 gemessen ist und die Shore-A-Härte gemäss der Norm DIN ISO 7619-1 vom Februar 2012 gemessen ist. Falls das erste Material, aus welchem die Schicht hergestellt ist, eine grössere Härte als das Material, aus welchem der Diffusor hergestellt ist, aufweist, so bietet dies den Vorteil, dass die Schicht optimal in den Diffusor eingreifen und der Diffusor sich optimal an den in den Diffusor eingreifenden Bereich der Schicht anschmiegen kann. Diese Ausführungsform ist zudem besonders montagefreundlich.

Falls das Gehäuse in den Diffusor eingreift und / oder der Diffusor in das Gehäuse eingreift, so ist gemäss einer Ausführungsform wenigstens eine der wenigstens einen im Gehäuse angeordnete Vertiefung und / oder wenigstens eine der wenigstens einen im Diffusor angeordnete Vertiefung eine vorgefertigte Vertiefung.

Bevorzugt ist das Material, aus welchem der Diffusor hergestellt ist, durch das zweite Material, aus welchem das Gehäuse hergestellt ist, verdrängbar.

Bevorzugt ist das Material, aus welchem der Diffusor hergestellt ist, durch das zweite Material, aus welchem das Gehäuse hergestellt ist, verdichtbar.

Bevorzugt ist das Material, aus welchem der Diffusor hergestellt ist, durch das zweite Material, aus welchem das Gehäuse hergestellt ist, verformbar, insbesondere elastisch verformbar.

Falls die Schicht in den Diffusor eingreift und / oder der Diffusor in die Schicht eingreift, so ist gemäss einer Ausführungsform wenigstens eine der wenigstens einen in der Schicht angeordnete Vertiefung und / oder wenigstens eine der wenigstens einen im Diffusor angeordnete Vertiefung eine vorgefertigte Vertiefung.

Gemäss einer bevorzugten Ausführungsform greift der Diffusor in die Schicht ein und / oder die Schicht greift in den Diffusor ein, wobei die Schicht bevorzugt aus einem transluzenten Material, insbesondere aus einem transparenten Material, hergestellt ist.

Bevorzugt ist das Material, aus welchem der Diffusor hergestellt ist, durch das erste Material, aus welchem die Schicht hergestellt ist, verdrängbar.

Bevorzugt ist das Material, aus welchem der Diffusor hergestellt ist, durch das erste Material, aus welchem die Schicht hergestellt ist, verdichtbar.

Bevorzugt ist das Material, aus welchem der Diffusor hergestellt ist, durch das erste Material, aus welchem die Schicht hergestellt ist, verformbar, insbesondere elastisch verformbar.

Bevorzugt ist bei einem Bauteil, welches das Gehäuse, eine einzige Schicht sowie den Diffusor aufweist, die Härte des zweiten Materials, aus welchem das Gehäuse hergestellt ist, grösser als die Härte des ersten Materiales, aus welchem die Schicht hergestellt ist, wobei die Härte des ersten Materiales, aus welchem die Schicht hergestellt ist, grösser ist als die Härte des Materiales ist, aus welchem der Diffusor hergestellt ist. Bei einem solchen Bauteil ist der Diffusor bevorzugt zwischen der Rückseite des flächigen Dekorelementes und der Vorderseite der Schicht angeordnet und die Innenseite des Gehäuses ist der Hinterseite der Schicht zugewandt. Die Schicht ist somit zwischen dem Diffusor und der dem Gehäuse angeordnet. Ein solches Bauteil ist besonders montagesicher.

Bevorzugt ist bei einem Bauteil, welches das Gehäuse, die erste Schicht und die zweite Schicht sowie den Diffusor aufweist, die Härte des zweiten Materials, aus welchem das Gehäuse hergestellt ist, grösser als die Härte des ersten Materiales, aus welchem die erste Schicht hergestellt ist, die Härte des ersten Materiales, aus welchem die erste Schicht hergestellt ist, grösser als die Härte des ersten Materiales, aus welchem die zweite Schicht hergestellt ist, sowie die Härte des ersten Materiales, aus welchem die zweite Schicht hergestellt ist, grösser als die Härte des Materiales aus welchem der Diffusor hergestellt ist. Bei einem solchen bevorzugten Bauteil ist der Diffusor bevorzugt zwischen der Rückseite des flächigen Dekorelementes und der Vorderseite der zweiten Schicht angeordnet sowie die erste Schicht bevorzugt zwischen der Hinterseite der zweiten Schicht sowie der Innenseite des Gehäuses angeordnet. Ein Bauteil mit einem derartigen Aufbau ist besonders montagesicher. Selbstverständlich kann bei diesem Bauteil beispielsweise, anstatt des Diffusors, eine dritte Schicht vorhanden sein, wobei die Härte des ersten Materiales, aus welchem die zweite Schicht hergestellt ist, bevorzugt grösser als die Härte des ersten Materiales ist, aus welchem die dritte Schicht hergestellt ist.

Gemäss einer bevorzugten Ausführungsform ist wenigstens ein Leuchtmittel oder wenigstens ein Beleuchtungsmodul wenigstens teilweise, bevorzugt vollständig, in der Schicht, welche bevorzugt aus einem transluzenten Kunststoff, insbesondere aus einem transparenten Kunststoff, hergestellt ist, eingebettet. Dies bietet den Vorteil, dass das Leuchtmittel oder das Beleuchtungsmodul vor Verschmutzungen, wie Flüssigkeiten und Feststoffen, sowie mechanischen Einwirkungen geschützt ist. Bevorzugt wird das Leuchtmittel oder das Beleuchtungsmodul wenigstens teilweise, bevorzugt vollständig, in die Schicht eingebettet, indem das Leuchtmittel oder das Beleuchtungsmodul mit Kunststoff angegossen, insbesondere angespritzt, wird. Ist das Leuchtmittel oder das Beleuchtungsmodul vollständig in die Schicht eingebettet, so ragt nur noch das Stromübertragungselement zur Versorgung des Leuchtmittels mit elektrischem Strom, welches beispielsweise als Anschlusskabel ausgebildet ist, aus der Schicht heraus. Somit weist die Schicht wenigstens eine Durchgang auf, durch welchen sich das Stromübertragungselement hindurcherstreckt, wobei das Material der Schicht unmittelbar dichtend am Stromübertragungselement anliegt.

Bevorzugt ist das Leuchtmittel oder das Beleuchtungsmodul zwischen der Rückseite des flächigen Dekorelementes und der Innenseite des Gehäuses angeordnet. Gemäss einer bevorzugten Ausführungsform ist das Leuchtmittel oder das Beleuchtungsmodul zwischen der Rückseite des flächigen Dekorelementes und der Vorderseite der Schicht angeordnet. Gemäss einer weiteren bevorzugten Ausführungsform bildet die Vorderseite der Schicht wenigstens eine Mulde in welche Mulde jeweils wenigstens ein Leuchtmittel oder wenigstens ein Beleuchtungsmodul angeordnet ist. Bevorzugt ist die Vorderseite der Schicht, welche die Mulde bildet, der Rückseite des flächigen Dekorelementes zugewandt. Gemäss einer weiteren bevorzugten Ausführungsform bildet die Innenseite des Gehäuses wenigstens eine Mulde in welche Mulde jeweils wenigstens ein Leuchtmittel oder wenigstens ein Beleuchtungsmodul eingelegt ist. Selbstverständlich können gemäss einer weiteren Ausführungsform die Schicht als auch das Gehäuse wenigstens eine Mulde aufweisen welche jeweils zur Aufnahme wenigstens eines Leuchtmittels oder wenigstens eines Beleuchtungsmodules geeignet ist.

Bevorzugt weist das wenigstens eine Dichtelement des Gehäuses, welches in die Schicht eingreift, in der Draufsicht auf die Innenseite des Gehäuses gesehen, eine äussere, insbesondere äusserste, Kante sowie eine innere, insbesondere innerste, Kante auf, wobei bevorzugt die äussere, bevorzugter die äusserste Kante, der Rückseite des flächigen Dekorelementes zugewandt ist, und wobei wenigstens ein Leuchtmittel eine lichtemittierende Oberfläche aufweist, welche derart zur inneren, bevorzugt innersten, Kante angeordnet ist, so dass das von der lichtemittierenden Oberfläche emittierte Licht in einen Bereich der Schicht eingestrahlt wird, welcher sich von der inneren, bevorzugt innersten, Kante in eine von der äusseren, bevorzugt äussersten, Kante abgewandten Richtung wegerstreckt. Dies bietet den Vorteil, dass das von der lichtemittierenden Oberfläche des Leuchtmittels emittierte, in die Schicht eingekoppelte und in der Schicht sich fortpflanzende Licht nicht durch das Dichtelement gestört wird.

Nach einer Weiterbildung der Erfindung ist das Gehäuse am flächigen Dekorelement, insbesondere an der Rückseite des flächigen Dekorelementes, befestigt.

Nach einer Weiterbildung der Erfindung ist das Gehäuse am Diffusor befestigt.

Nach einer Weiterbildung der Erfindung bildet das Gehäuse an einer der Sichtseite des flächigen Dekorelementes gegenüberliegenden Seite des Bauteils eine Rückwand des Bauteils, wobei die Rückwand bevorzugt eine Rückseite des Bauteils bildet und wobei das Gehäuse bevorzugt eine zwischen der Sichtseite des flächigen Dekorelementes und der Rückseite des Bauteils angeordnete, bevorzugt umlaufende, Seitenwand des Bauteils bildet.

Nach einer Weiterbildung der Erfindung ist das flächige Dekorelement lichtdurchlässig oder lichtundurchlässig ausgebildet, bevorzugt lichtdurchlässig ausgebildet. Ist das flächige Dekorelement lichtdurchlässig ausgebildet, so ist das flächige Dekorelement beispielsweise aus einem lichtdurchlässigen Kunststoff hergestellt oder das flächige Dekorelement ist aus einem lichtundurchlässigen Material hergestellt, welches wenigstens einen Durchbruch aufweist durch welchen Licht durch das flächige Dekorelement hindurchtreten kann. Das lichtundurchlässige Material ist beispielsweise Metall oder Kunststoff.

Nach einer Weiterbildung der Erfindung ist auf die Rückseite des flächigen Dekorelementes wenigstens eine Folie aufgebracht. Die Folie ist bevorzugt lichtdurchlässig ausgebildet. Die Folie kann beispielsweise als Diffusor ausgebildet sein. Selbstverständlich kann die Folie auch lichtundurchlässig ausgebildet sein. Weist das flächige Dekorelement wenigstens einen Durchbruch auf, so greift die Folie bevorzugt in wenigstens einen Durchbruch ein.

Nach einer Weiterbildung der Erfindung bildet die Sichtseite des flächigen Dekorelementes, wenigstens teilweise, bevorzugt vollständig, eine Sichtseite des Bauteils, insbesondere wenn das Bauteil im montierten Zustand ist.

Bevorzugt ist das Bauteil als eine Zierleiste oder ein Bedienelement, wie beispielsweise eine Taste, insbesondere bevorzugt als eine Fuss- oder Einstiegsleiste eines Fahrzeugs, ausgebildet. Beim Fahrzeug handelt es sich bevorzugt um ein Kraftfahrzeug und insbesondere bevorzugt um ein strassengebundenes Fahrzeug. Das Bauteil kann im Innenbereich und / oder Aussenbereich des Fahrzeuges vorgesehen sein. Das Bauteil kann beispielsweise aber auch als eine Zierleiste oder ein Bedienelement eines Haushaltgerätes, wie beispielsweise eines Kühlschrankes, eines Dampfgarers, einer Waschmaschine, eines Backofens, eines Kochherdes, einer Geschirrspülmaschine oder eines Möbels ausgebildet sein.

Es wird zudem ein Verfahren zur Herstellung eines Bauteils angegeben, insbesondere eines Bauteils wie es oben angegeben ist, aufweisend folgende Schritte:
- Bereitstellung wenigstens einer Schicht mit einer Vorderseite und einer Hinterseite;
- Bereitstellung wenigstens eines Gehäuses mit einer Innenseite und einer Aussenseite;
- Fügen der Schicht und des Gehäuses derart, so dass das Gehäuse in wenigstens eine in der Schicht angeordnete Vertiefung eingreift.

Nach einer Weiterbildung der Erfindung wird ein flächiges Dekorelement mit einer Sichtseite und einer Rückseite derart angeordnet, so dass die Rückseite des flächigen Dekorelementes der Vorderseite wenigstens einer der wenigstens einen Schicht zugewandt ist.

Nach einer Weiterbildung der Erfindung wird zwischen der Rückseite des flächigen Dekorelementes und der Vorderseite wenigstens einer der wenigstens einen Schicht wenigstens ein Diffusor derart angeordnet, so dass der Diffusor bevorzugt in die Vorderseite wenigstens einer der wenigstens einen Schicht eingreift und / oder wobei bevorzugt wenigstens eine der wenigstens einen Schicht in den Diffusor eingreift. Gemäss einer bevorzugten Ausführungsform ist das erste Material, aus welchem die Schicht hergestellt ist, durch das Material, aus welchem der Diffusor hergestellt ist, verdrängbar und / oder verdichtbar und / oder verformbar, insbesondere elastisch verformbar. Gemäss einer weiteren bevorzugten Ausführungsform ist das Material, aus welchem der Diffusor hergestellt ist, durch das erste Material, aus welchem die Schicht hergestellt ist, verdrängbar und / oder verdichtbar und / oder verformbar, insbesondere elastisch verformbar. Bevorzugt wird der Diffusor hergestellt, indem die Rückseite des flächigen Dekorelementes insbesondere mit Kunststoff angegossen, insbesondere bevorzugt angespritzt, wird.

Nach einer Weiterbildung der Erfindung ist das erste Material, aus welchem die Schicht hergestellt ist, durch das zweite Material, aus welchem das Gehäuse hergestellt ist, verdrängbar und / oder verdichtbar und / oder verformbar, insbesondere elastisch verformbar.

Nach einer Weiterbildung der Erfindung ist das zweite Material, aus welchem das Gehäuse hergestellt ist, durch das erste Material, aus welchem die Schicht hergestellt ist, verdrängbar und / oder verdichtbar und / oder verformbar, insbesondere elastisch verformbar. Nach einer Weiterbildung der Erfindung entsteht wenigstens eine der wenigstens einen in der Schicht angeordneten Vertiefung während des Fügens der Schicht und des Gehäuses, wobei bevorzugt während des Fügens das Gehäuse gleichzeitig in die in der Schicht entstehende Vertiefung, bevorzugt über wenigstens ein Dichtelement des Gehäuses eingreift.

Nach einer Weiterbildung der Erfindung wird wenigstens ein Leuchtmittel und / oder wenigstens ein Beleuchtungsmodul derart zu wenigstens einer der wenigstens einen Schicht angeordnet, so dass Licht des Leuchtmittels und / oder des Beleuchtungsmodules in wenigstens eine der wenigstens einen Schicht einkoppelbar ist. Bevorzugt wird das Leuchtmittel und / oder Beleuchtungsmodul in wenigstens eine der wenigstens einen Schicht wenigstens teilweise, bevorzugt vollständig, eingebettet, indem bevorzugt das Leuchtmittel und / oder Beleuchtungsmodul insbesondere mit Kunststoff umgossen wird.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Figur 1: schematisch einen Längsschnitt durch ein erfindungsgemässes Bauteil entlang der Linie I-I der Figur 3;
- Figur 2: schematisch eine Draufsicht auf einen Querschnitt entlang der Linie II-II durch das Bauteil gemäss Figur 1;
- Figur 3: schematisch eine Draufsicht auf eine Sichtseite des Bauteils gemäss Figur 1;
- Figur 4: schematisch einen Längsschnitt durch eine erste Ausführungsform eines erfindungsgemäss Bauteils;
- Figur 5: schematisch einen Längsschnitt durch eine zweite Ausführungsform eines erfindungsgemässen Bauteils;
- Figur 6: schematisch eine Draufsicht auf einen Querschnitt entlang der Linie III-III durch das Bauteil gemäss Figur 5;
- Figur 7: schematisch eine Draufsicht auf einen Querschnitt entlang der Linie III-III durch eine erste Variante des Bauteils gemäss Figur 5;
- Figur 8: schematisch eine Draufsicht auf einen Querschnitt entlang der Linie III-III durch eine zweite Variante des Bauteils gemäss Figur 5.

### BESCHREIBUNG BEVORZUGTER AUSFÜHRUNGSFORMEN

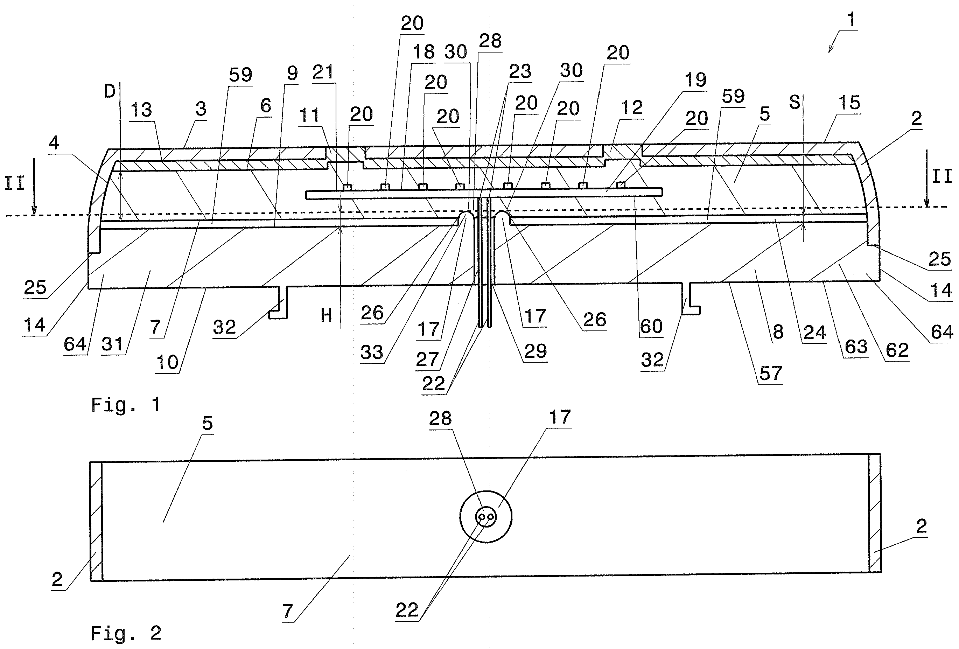

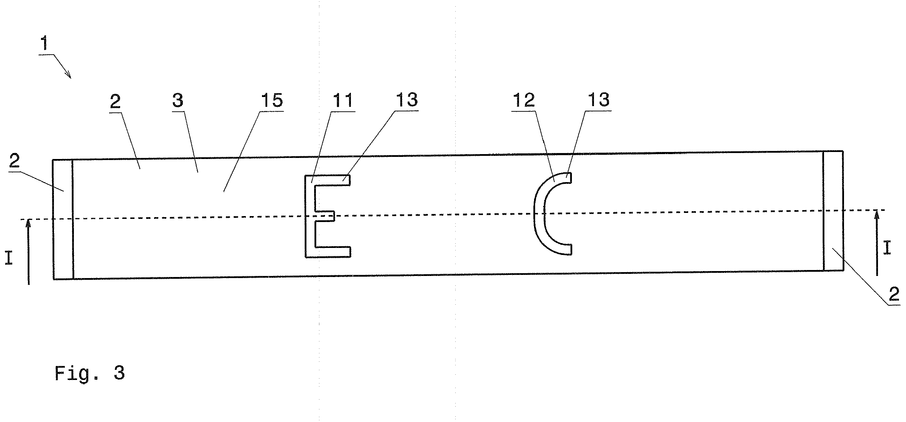

Die Figur 1 zeigt schematisch einen Längsschnitt durch ein erfindungsgemässes Bauteil 1 entlang der Linie I-I der Figur 3. Das Bauteil 1 ist im vorliegenden Fall als Zierleiste ausgebildet. Das erfindungsgemäss Bauteil 1 umfasst ein flächiges Dekorelement 2 mit einer Sichtseite 3 und einer Rückseite 4. Das flächige Dekorelement 2 ist beispielsweise aus einem lichtundurchlässigen Metall oder aus einem lichtundurchlässigen Kunststoff oder aus einem transluzenten, insbesondere transparenten, Kunststoff hergestellt. Dass das Dekorelement 2 "flächig" ausgebildet ist, bedeutet, wie in den Figuren 1 und 3 ersichtlich, dass das Dekorelement 2 entlang von zwei Dimensionen wesentlich grösser, insbesondere um ein Vielfaches grösser, dimensioniert ist als entlang einer dritten Dimension, welche sich senkrecht zur Flächenausdehnung der Sichtseite 3 des Dekorelementes 2 erstreckt. Das flächige Dekorelement 2 ist, wie in den Figuren 1 und 3 ersichtlich, als Band ausgebildet. Das flächige Dekorelement 2 weist einen ersten Durchbruch 11 sowie einen zweiten Durchbruch 12 auf (Figur 1). Wie in Figur 3 ersichtlich, bildet der Durchbruch 11, in der Draufsicht auf die Sichtseite 3 des flächigen Dekorelementes 2 gesehen, einen Buchstaben E und der Durchbruch 12 bildet, in der Draufsicht auf die Sichtseite 3 des flächigen Dekorelementes 2 gesehen, einen Buchstaben C. Die angegebene Anzahl an Durchbrüchen sowie die beiden angegebenen Buchstaben sind nur beispielhaft. Grundsätzlich kann das flächige Dekorelement 2 wenigstens einen Durchbruch aufweisen welcher wenigstens ein Symbol, wie beispielsweise ein Buchstabe, bildet.

An der Rückseite 4 des flächigen Dekorelementes 2 ist eine einzige Schicht 5 mit einer Vorderseite 6 und einer Hinterseite 7 angeordnet. Die Schicht 5 ist bevorzugt aus einem transluzenten, insbesondere transparenten, ersten Material, hergestellt, wobei die Vorderseite 6 der Schicht 5 der Rückseite 4 des flächigen Dekorelementes 2 zugewandt ist. Zwischen der Rückseite 4 des flächigen Dekorelementes 2 und der Vorderseite 6 der Schicht 5 ist eine transluzente, insbesondere transparente, Folie 13 angeordnet, welche an der Rückseite 4 des flächigen Dekorelementes 2 befestigt ist und welche in die Durchbrüche 11 und 12 eingreift. Die Folie 13 schliesst, wie in Figur 1 ersichtlich, bündig mit der Sichtseite 3 des flächigen Dekorelementes 2 ab und verhindert somit, dass Verschmutzungen, wie Feststoffe oder Flüssigkeiten, über die Durchbrüche 11 und 12 des flächigen Dekorelementes 2 in das Bauteil 1 gelangen können. Die Folie 13 kann, falls erwünscht, als Diffusor ausgebildet sein. Die Schicht 5 ist, wie in Figur 1 ersichtlich, an der Rückseite 4 des flächigen Dekorelementes 2 sowie der Folie 13 befestigt und greift unterhalb der Durchbrüche 11 und 12 in die Folie 13 ein. Selbstverständlich kann die Schicht 5, alternativ zur Folie 13, oder zusätzlich zur Folie 13, als Diffusor ausgebildet sein.

Ein Beleuchtungsmodul 18 ist, wie in Figur 1 erkennbar, vollständig in der Schicht 5 eingebettet. Die Schicht 5 ist bevorzugt mittels eines Giessprozesses, bevorzugter mittels eines Spritzgussprozesses, hergestellt. Das Beleuchtungsmodul 18 umfasst einen als Platine ausgebildeten Träger 19 mit einer Vorderseite 21 und einer Rückseite 60, als Leuchtdiode ausgebildete Leuchtmittel 20, welche auf der Vorderseite 21 des Trägers 19 angeordnet sind sowie ein Stromübertragungselement 22, welches zwei Anschlusskabel umfasst, zur Versorgung der Leuchtmittel 20 mit elektrischem Strom. Gegebenenfalls umfasst das Beleuchtungsmodul 20 zusätzlich eine Elektronik. Jedes der beiden genannten Anschlusskabel erstreckt sich jeweils durch einen in der Schicht 5 angeordneten Durchgang 23, wobei das Material der Schicht 5 unmittelbar dichtend an den Anschlusskabeln anliegt. Emittieren die Leuchtmittel 20 Licht, so pflanzt sich das Licht innerhalb der Schicht 5 fort und verlässt über die Folie 13 sowie die Durchbrüche 11 und 12 das Bauteil 1 beziehungsweise wird von einer Sichtseite 15 des Bauteils 1 beziehungsweise von der Sichtseite 3 des flächigen Dekorelementes 2 abgestrahlt.

Des Weiteren weist das Bauteil 1 ein Gehäuse 8 mit einer Innenseite 9 und einer Aussenseite 10 auf, wobei die Innenseite 9 des Gehäuses 8 der Hinterseite 7 der Schicht 5 zugewandt ist. Das Gehäuse 8 bildet, wie in Figur 1 erkennbar, eine Rückwand 62, eine Rückseite 63 sowie eine umlaufende Seitenwand 64 des Bauteils 1. Wie in Figur 1 ersichtlich, bildet somit die Folie 13 gemeinsam mit der Sichtseite 3 des flächigen Dekorelementes 2 sowie einem Teilbereich 14 der Aussenseite 10 des Gehäuses 8 die Sichtseite 15 des Bauteils 1. Des Weiteren ist in Figur 1 erkennbar, dass das Gehäuse 8 ein Rückseite 57 des Bauteils 1 bildet, welche gegenüber der Sichtseite 15 des Bauteils 1 liegt. Das Gehäuse 8 ist bevorzugt aus einem lichtundurchlässigen zweiten Material hergestellt. Dies bietet den Vorteil, dass von den Leuchtmittel 20 abgestrahltes Licht nicht über das Gehäuse 8 aus dem Bauteil 1 austreten kann. Zwischen der Hinterseite 7 der Schicht 5 und der Innenseite 9 des Gehäuses 8 ist ein Spalt 24, insbesondere ein mit Luft gefüllter Spalt 24, angeordnet, welcher ermöglicht, dass von den Leuchtmitteln 20 abgestrahltes Licht sich innerhalb der Schicht 5, insbesondere durch Totalreflexion, fortpflanzen kann. Das Gehäuse 8 ist an einer umlaufenden Stirnseite 25 des flächigen Dekorelementes 2 dicht befestigt, so dass keine Verschmutzungen, wie Feststoffe oder Flüssigkeiten, zwischen dem flächigen Dekorelement 2 und dem Gehäuse 8 in das Bauteil 1 eintreten können. Zudem ist das Gehäuse 8 an der Schicht 5 befestigt, indem das Gehäuse 8 über ein sich in Richtung der Hinterseite 7 der Schicht 5 gerichtetes und als Erhebung ausgebildetes, im Querschnitt parabelförmiges Dichtelement 17 in eine in der Schicht 5 angeordnete Vertiefung 26 eingreift. Somit bilden die Innenseite 9 des Gehäuses 8, die Hinterseite 7 der Schicht 5 sowie die Rückseite 4 des flächigen Dekorelement 2 gemeinsam einen abgeschlossenen Raum 59. Der Raum 59 bildet somit einen Teilbereich des Spaltes 24. Wie in Figur 2 ersichtlich, ist das Dichtelement 17 in der Draufsicht gesehen kreisförmig ausgebildet.

In Figur 1 ist ersichtlich, dass das Gehäuse 8 einen Grundkörper 31 sowie das Dichtelement 17 aufweist, wobei der Grundkörper 31 sowie das Dichtelement 17 des Gehäuses 8 einstückig miteinander verbunden sind. Der Grundkörper 31 sowie das Dichtelement 17 sind somit aus demselben Material hergestellt. Das Gehäuse 8 kann beispielsweise aber auch zweistückig ausgebildet sein. In diesem Fall ist beispielsweise der Grundkörper 31 aus einem Material hergestellt, welches unterschiedlich zum Material ist aus welchem das Dichtelement 17 hergestellt ist. Im Falle eines zweistückigen Gehäuses 8 können der Grundkörper 31 sowie das Dichtelement 17 aber auch aus demselben Material hergestellt sein. In diesem Fall ist der Grundkörper 31 beispielsweise stoffschlüssig mit dem Dichtelement 17 verbunden. Zudem weist das Bauteil 1 wenigstens zwei Befestigungselemente 32 auf, welche einstückig mit dem Grundkörper 31 des Gehäuses 8 verbunden sind. Die Befestigungselemente 32 dienen dazu, das Bauteil 1 an einer nicht dargestellten Oberfläche, beispielsweise eines Fahrzeuges, zu befestigen. Ein solcher Bestandteil des Bauteils 1, umfassend das Gehäuse 8, aufweisend den Grundkörper 31 sowie das Dichtelement 17, sowie die Befestigungselemente 32, kann besonders einfach und kostengünstig hergestellt werden.

Das durch die Schicht 5 sich hindurcherstreckende Stromübertragungselement 22 erstreckt sich zudem, wie in Figur 1 erkennbar, durch einen Durchbruch 27 des Gehäuses 8 hindurch. Die Innenseite 9 des Gehäuses 8, beziehungsweise das Dichtelement 17, bildet eine Eingangsöffnung 28 des Durchbruches 27. Die Ausgangsöffnung 29 des Durchbruches 27, über welches das Stromübertragungselement 22 das Bauteil 1 verlässt, wird durch die Aussenseite 10 des Gehäuses 8 gebildet. Die Figur 2 zeigt einen Querschnitt der beiden Anschlusskabel, welche gemeinsam das Stromübertragungselement 22 bilden, und welche in den Durchbruch 27 hineinragen.

Das Gehäuse 8 ist beispielsweise aus Kunststoff, Metall, Glas oder Keramik hergestellt. Bevorzugt ist das Gehäuse 8 aus Kunststoff hergestellt. Der Kunststoff umfasst bevorzugt wenigstens einen Thermoplasten und / oder wenigstens einen Duroplasten, bevorzugter wenigstens einen Thermoplasten. Der Thermoplast ist beispielsweise Acrylnitril-Butadien-Styrol (ABS), Polyamid (PA), Polymethylmethacrylat (PMMA), Polycarbonat (PC), Polyethylenterephthalat (PET), Polyethylen (PE), Polypropylen (PP), Polystyrol (PS), Polyetheretherketon (PEEK) oder Polyvinylchlorid (PVC). Falls das Gehäuse 8 aus einem Kunststoff hergestellt ist, welcher wenigstens einem Thermoplasten umfasst, so wird die Härte des Gehäuses 8, beziehungsweise die Härte des Materiales, aus welchem das Gehäuse 8 hergestellt ist, bevorzugt gemäss der Norm DIN EN ISO 2039-1 vom Juni 2003 gemessen. Falls das Gehäuse 8 aus einem Kunststoff hergestellt ist, welcher wenigstens einem Thermoplasten umfasst, so weist das Gehäuse 8 bevorzugt eine Kugeleindruckhärte im Bereich von 10-200 N/mm² auf gemessen gemäss der Norm DIN EN ISO 2039-1 vom Juni 2003. Das Material aus welchem das Gehäuse 8 hergestellt ist, wie beispielsweise Kunststoff, kann, je nach Bedarf, gegebenenfalls noch Zusatzstoffe, wie beispielsweise Verstärkungsmaterialien, enthalten.

Die Schicht 5 ist beispielsweise aus Kunststoff oder Glas, bevorzugt aus Kunststoff, hergestellt. Der Kunststoff umfasst bevorzugt wenigstens einen Thermoplasten und / oder wenigstens einen Duroplasten und / oder wenigstens ein Elastomer, bevorzugter wenigstens einen Thermoplasten und / oder wenigstens ein Elastomer, noch bevorzugter wenigstens ein Elastomer. Der Thermoplast ist beispielsweise Acrylnitril-Butadien-Styrol (ABS), Polyamid (PA), Polymethylmethacrylat (PMMA), insbesondere ein PMMA-Block-Copolymer, Polycarbonat (PC), Polyethylenterephthalat (PET), Polyethylen (PE), Polypropylen (PP), Polystyrol (PS), Polyetheretherketon (PEEK) oder Polyvinylchlorid (PVC). Das Elastomer ist beispielsweise Silikon, insbesondere Silikonkautschuk. Die Schicht 5, falls diese beispielsweise aus Kunststoff oder Glas hergestellt ist, kann, falls erwünscht, Zusatzstoffe enthalten.

Ist die Schicht 5 aus Kunststoff hergestellt und umfasst der Kunststoff wenigstens einen Thermoplasten und / oder wenigstens einen Durplasten, bevorzugt wenigstens einen Thermoplasten, so wird die Härte des Kunststoffes der Schicht 5 bevorzugt gemäss der Norm DIN EN ISO 2039-1 vom Juni 2003 gemessen. Bevorzugt weist der Kunststoff der Schicht 5, umfassend wenigstens einen Thermoplasten und / oder wenigstens einen Duroplasten, bevorzugt umfassend wenigstens einen Thermoplasten, eine Kugeleindruckhärte gemessen gemäss der Norm DIN EN ISO 2039-1 vom Juni 2003 im Bereich von 10-200 N/mm² auf.

Ist die Schicht 5 aus Kunststoff hergestellt und umfasst der Kunststoff wenigstens ein Elastomer, bevorzugt Silikon, bevorzugter Silikonkautschuk, so wird die Härte des Kunststoffes der Schicht 5 bevorzugt gemäss der Norm DIN ISO 7619-1 vom Februar 2012 gemessen. Bevorzugt weist der Kunststoff, umfassend wenigstens ein Elastomer, der Schicht 5 eine Shore-A-Härte gemessen gemäss der Norm DIN ISO 7619-1 vom Februar 2012 im Bereich von 5-90 auf. Das Material, aus welchem das Gehäuse 8 hergestellt ist, weist eine Härte auf, welche bevorzugt grösser ist als die Härte des Materials, aus welchem die Schicht 5 hergestellt ist.

Werden bei der Herstellung des Bauteiles 1 das Gehäuse 8 und die Schicht 5 gefügt, so wird, im Falle einer grösseren Härte des Materiales des Gehäuses 8 im Vergleich zur Härte des Materiales der Schicht 5, durch das Dichtelement 17 des Gehäuses 8 in der Schicht 5 eine kreisförmige Vertiefung 26 generiert, in welche das kreisförmige Dichtelement 17 gleichzeitig, beziehungsweise während des Fügeprozesses, eingreift. Bevorzugt wird beim Fügen des Gehäuses 8 und der Schicht 5 das Material der Schicht 5 durch das Material des Gehäuses 8 verdrängt und / oder verdichtet und / oder verformt, insbesondere elastisch verformt. Hierdurch werden das Gehäuse 8 und die Schicht 5 gut aneinander befestigt. Das Gehäuse 8 und die Schicht 5 werden besonders gut aneinander befestigt, falls das Material der Schicht 5 durch das Material des Gehäuses 8 verformt, insbesondere elastisch verformt, wird.

Falls die Härte des Materiales des Gehäuses 8 grösser als die Härte des Materiales der Schicht 5 ist, schmiegt sich das Material der Schicht 5 besonders gut an das Material des Gehäuses 8, beziehungsweise an eine Oberfläche 30 eines Abschnittes 33 des Dichtelementes 17, welcher in die Vertiefung 26 eingreift, an, und somit korrespondiert die Form des eingreifenden Abschnittes 33 des Dichtelementes 17 mit der Form der Vertiefung 26.

Das Eingreifen des kreisförmigen Dichtelementes 17 in die Schicht 5, das Anschmiegen der Schicht 5 an das Gehäuse 8 sowie die Tatsache, dass das Dichtelement 17 die Eingangsöffnung 28 des Durchbruches 27 bildet, bewirkt den Vorteil, dass allfällige Verschmutzungen, wie Feststoffe oder Flüssigkeiten, über den Durchbruch 27 des Gehäuses 8 nicht in den Raum 59 gelangen können und somit die Funktionsfähigkeit des Bauteils 1, insbesondere die Lichtleitung innerhalb der Schicht 5, nicht beeinträchtigen können. Zudem ist aufgrund des Eingreifens des Gehäuses 8 in die Schicht 5 das Bauteil 1 stabiler und eine Relativbewegung der Schicht 5 bezüglich des Gehäuses 8, beziehungsweise eine Relativbewegung des Gehäuses 8 bezüglich der Schicht 5, wird daher verhindert. Durch diese Anordnung wird somit die Gefahr der Generierung von Klappergeräuschen durch das Bauteil 1 vermindert und somit wird das Bauteil 1 geräuschemissionsärmer. Die Funktionssicherheit des Bauteils 1 ist weiter gesteigert aufgrund der Tatsache, dass das Beleuchtungsmodul 18 vollständig in der Schicht 5 eingebettet ist. Wie in Figur 1 ersichtlich, ragt nur noch das Stromübertragungselement 22, umfassend zwei Anschlusskabel, aus der Schicht 5 heraus. Allfällige Verschmutzungen, wie beispielsweise Feststoffe oder Flüssigkeiten, können somit nicht zum Beleuchtungsmodul 18 hin gelangen und das Beleuchtungsmodul 18 als Solches oder die Lichtemission des Beleuchtungsmodules 18 in die Schicht 5 beeinträchtigen. Zudem ist das Bauteil 1 aufgrund seines Aufbaus einfach und kostengünstig herstellbar. Die Anfälligkeit des Bauteils 1 auf Verschmutzungen, wie beispielsweise Feststoffe oder Flüssigkeiten, kann weiter reduziert werden, indem das Material des Gehäuses 8 unmittelbar dichtend an einem Abschnitt des Stromübertragungselementes 22 anliegt, welcher sich durch das Gehäuse 8 hindurcherstreckt.

Des Weiteren kann durch die Auswahl der Härte des Materiales, aus welchem die Schicht 5 hergestellt ist, relativ zur Härte des Materiales, aus welchem das Gehäuse 8 hergestellt ist, beim Zusammenfügen der Schicht 5 und des Gehäuses 8, bei welchem das Gehäuse 8 in die Schicht 5 eingreift, der Spalt 24, beziehungsweise die Höhe S des Spaltes 24, und somit auch die Höhe des Raumes 59, definiert eingestellt werden. Diese definierte Einstellung des Spaltes 24, beziehungsweise dieses definierte Einstellung des Raumes 59, ist insbesondere vorteilhaft, falls die Schicht 5 zur Lichtleitung vorgesehen ist und somit aus einem transluzenten, insbesondere transparenten, Material hergestellt ist. Die Höhe S liegt beispielsweise im Bereich von 0.01 bis 0.1 Millimeter. Mit der Höhe S des Spaltes 24 ist die Ausdehnung des Spaltes 24 entlang der senkrecht zur Innenseite 9 des Gehäuses 8 stehenden Richtung gemeint.

Die Schicht 5 weist beispielsweise eine Dicke D im Bereich von 0.5 Millimeter - 3 Millimeter, bevorzugt im Bereich von 0.5 Millimeter bis 2.6 Millimeter auf. Das Dichtelement 17 hat beispielsweise eine Höhe H im Bereich von 0.2 Millimeter bis 0.4 Millimeter. Mit der Dicke D der Schicht 5 ist die Ausdehnung der Dicke D entlang der senkrecht zur Hinterseite 7 der Schicht 5 stehenden Richtung gemeint. Mit der Höhe H des Dichtelementes 17 ist die Ausdehnung der Höhe H entlang der senkrecht zur Innenseite 9 des Gehäuses 8 stehenden Richtung gemeint. In Abhängigkeit der gewünschten Eigenschaften des Bauteils 1 werden die Dimensionen "Dicke D", "Höhe H", "Höhe S" sowie die Verhältnisse der Dimensionen "Dicke D", "Höhe H", "Höhe S" zueinander ausgewählt.

Das Bauteil 1 kann beispielsweise wie folgt hergestellt werden: In einem ersten Schritt wird das flächiges Dekorelement 2 bereitgestellt und mit den Durchbrüchen 11 und 12, beispielsweise mittels Stanzen oder Laser, versehen. Danach wird das mit den Durchbrüchen 11 und 12 versehene flächige Dekorelement 2 vorgeformt, beispielsweise mittels eines Tiefziehprozesses. An die Rückseite 4 des vorgeformten, mit den Durchbrüchen 11 und 12 versehenen flächigen Dekorelementes 2 wird danach die Folie 13 befestigt, beispielsweise mittels eines Klebstoffes. Anschliessend wird das mit der Folie 13 versehene flächige Dekorelement 2 in ein nicht dargestelltes Giesswerkzeug, insbesondere Spritzgiesswerkzeug, eingelegt sowie hinter der Folie 13, beziehungsweise unterhalb der Folie 13, das Beleuchtungsmodul 18 angeordnet und fixiert, so dass beim nun folgenden Giessvorgang der Schicht 5 das Beleuchtungsmodul 18 durch den Giessdruck nicht verschoben wird. Die Rückseite 4 des flächigen Dekorelementes 2 sowie die Folie 13 werden nun beispielsweise mit einem transluzenten, bevorzugt transparenten, Kunststoff hintergossen, insbesondere hinterspritzt, so dass einerseits ein Teilbereich der Folie 13 in die Durchbrüche 11 und 12 hineingepresst wird und andererseits das Beleuchtungsmodul 18 vollständig in dem die Schicht 5 bildenden Kunststoff eingebettet ist, so dass nur noch das Stromübertragungselement 22, umfassend zwei Anschlusskabel, aus der Schicht 5 herausragt. Durch den Giessdruck kann das flächige Dekorelement 2, falls erwünscht, weiter verformt werden. Selbstverständlich ist es auch möglich, dass das flächige Dekorelement 2 noch unverformt hintergossen wird und es erst bei der Bildung der Schicht 5, beziehungsweise beim Hintergiessen, verformt wird. Anschliessend wird das vorgefertigte Gehäuse 8 an der Stirnseite 25 des flächigen Dekorelementes 3 befestigt. Das Gehäuse 8 wird zudem am flächigen Dekorelement 2 befestigt, indem das Dichtelement 17 des Gehäuses 8 in die Schicht 5 eingreift. Bei der soeben beschriebenen Befestigung des Gehäuses 8 am flächigen Dekorelement 2 wird das Stromübertragungselement 22 über den Durchbruch 27 des Gehäuses 8 aus dem nun gefertigten Bauteil 1 herausgeführt.

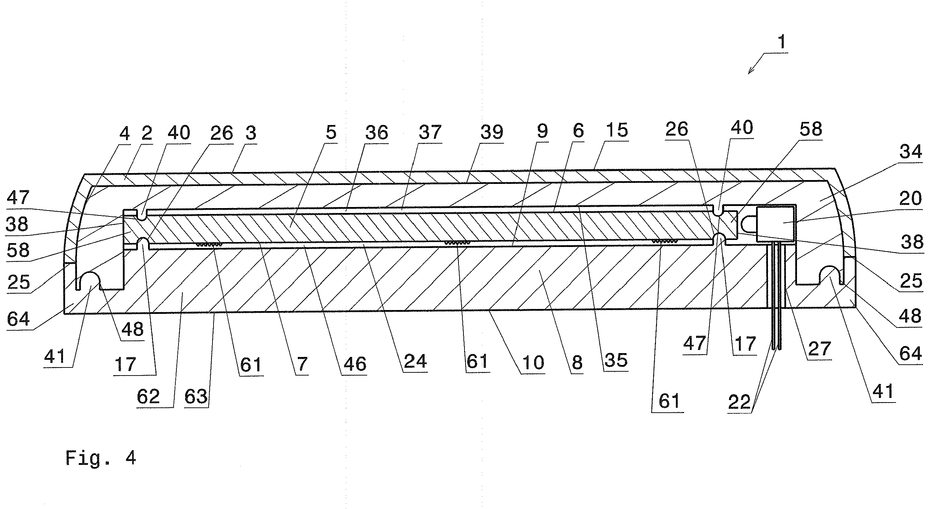

Die Figur 4 zeigt schematisch einen Längsschnitt durch eine erste Ausführungsform eines erfindungsgemäss Bauteils. Das Bauteil 1 gemäss Figur 4 weist ein flächiges Dekorelement 2 mit einer Sichtseite 3 und einer Rückseite 4 auf, welches beispielsweise aus einem transluzenten, insbesondere transparenten, Kunststoff gefertigt ist. Möglich ist beispielsweise auch, dass das flächige Dekorelement 2 aus einer transluzenten Metallfolie hergestellt ist. An der Rückseite 4 des flächigen Dekorelementes 2 ist ein Diffusor 34 mit einer Vorderseite 39 und einer Rückseite 35 angeordnet. Bevorzugt wird der Diffusor 34 durch hintergiessen, bevorzugt Hinterspritzen, der Rückseite 4 des flächigen Dekorelementes 2 hergestellt. Unterhalb des Diffusors 34 ist eine Schicht 5 mit einer Vorderseite 6 und einer Hinterseite 7, welche beispielsweise plattenförmig ausgebildet ist, angeordnet. Die Vorderseite 6 der Schicht 5 ist der Rückseite 35 des Diffusors 34 zugewandt. Wie in Figur 4 erkennbar, ist zwischen der Vorderseite 6 der Schicht 5 und der Rückseite 35 des Diffusors 34 ein Spalt 36, welcher beispielsweise Luft enthält, vorhanden. Des Weiteren weist der Diffusor 34 ein einziges umlaufendes Dichtelement 40 auf, welches in Richtung der Vorderseite 6 der Schicht 5 ausgerichtet ist und in eine einzige Vertiefung der Schicht 5 eingreift. Da das Dichtelement 40 umlaufend ausgebildet ist, ist zwischen der Vorderseite 6 der Schicht 5 sowie der Rückseite 35 des Diffusors 34 ein abgeschlossener Raum 37 vorhanden. Der abgeschlossene Raum 37 bildet somit einen Teilbereich des Spaltes 36.

Wie in Figur 4 ersichtlich, ist unterhalb der Schicht 5 ist ein bevorzugt lichtundurchlässiges Gehäuse 8 mit einer Innenseite 9 und einer Aussenseite 10 angeordnet. Zwischen der Innenseite 9 des Gehäuses 8 und der Hinterseite 7 der Schicht 5 ist ein Spalt 24 angeordnet. In eine in der Schicht 5 angeordnete Vertiefung 26 an der Hinterseite 7 der Schicht 5 greift ein einziges, umlaufendes Dichtelement 17 des Gehäuses 8 ein. Das Dichtelement 17 greift somit unterbruchsfrei entlang der Erstreckung eines umlaufenden Randbereiches 58 der Schicht 5 in die Schicht 5 ein. Da das Dichtelement 17 umlaufend ausgebildet ist, ist ein abgeschlossener Raum 46 zwischen einer Hinterseite 7 der Schicht 5 sowie der Innenseite 9 des Gehäuses 8 angeordnet. Der abgeschlossene Raum 46 bildet somit einen Teilbereich des Spaltes 24.

Das Gehäuse 8 wiederum greift über ein weiteres, umlaufendes Dichtelement 41 in eine Vertiefung 48 des Diffusors 34 ein, wobei durch dieses Eingreifen das Gehäuse 8 am Diffusor 34 befestigt ist. Zusätzlich kann das Gehäuse 8, falls erwünscht, an einer umlaufenden Stirnseite 25 des flächigen Dekorelementes 2 befestigt sein. Ein Stromübertragungselement 22, welches zwei Anschlusskabel umfasst, erstreckt sich von einem Leuchtmittel 20 durch einen Durchbruch 27 des Gehäuses 8 zur Aussenseite 10 des Gehäuses 8.

Die Schicht 5 sowie der Diffusor 34 sind beispielsweise aus Silikon, insbesondere Silikonkautschuk, oder PMMA-Block-Copolymer hergestellt. Ist die Schicht 5 sowie der Diffusor 34 aus Silikon, insbesondere Silikonkautschuk, hergestellt, so wird die Shore-A-Härte der Schicht 5 sowie des Diffusors 34 bevorzugt gemäss der Norm DIN ISO 7619-1 vom Februar 2012 gemessen. Ist die Schicht 5 sowie der Diffusor 34 aus PMMA-Block-Copolymer hergestellt, so wird die Härte des Materiales der Schicht 5 sowie des Diffusors 34 bevorzugt gemäss der Norm DIN EN ISO 2039-1 vom Juni 2003 gemessen. Das Gehäuse 8 ist bevorzugt aus einem Kunststoff umfassend wenigstens einen Thermoplasten und / oder wenigstens einen Duroplasten, bevorzugt wenigstens einen Thermoplasten, hergestellt. Mögliche Duroplaste für die Herstellung des Gehäuses 8 sind beispielsweise Epoxide, Polyurethane, Phenolformaldehydharze oder Polyester. Lichtdurchlässige Duroplaste, wie beispielsweise Epoxide oder Polyester, können beispielsweise auch für die Herstellung der Schicht 5 sowie des Diffusors 34 verwendet werden. Bevorzugt wird die Härte des Materiales aus welchem das Gehäuse 8 hergestellt ist gemäss der Norm DIN EN ISO 2039-1 vom Juni 2003 gemessen.

Bevorzugt weist das Material aus welchem der Diffusor 34 hergestellt ist eine Shore-A-Härte im Bereich von 5-90 auf. Das Material aus welchem die Schicht 5 hergestellt ist weist bevorzugt eine Shore-A-Härte im Bereich von 5-90 auf. Das Material aus welchem das Gehäuse 8 hergestellt ist, weist bevorzugt eine Härte im Bereich von 10-200 N/mm² auf.

Das Material aus welchem das Gehäuse 8 hergestellt ist, weist eine Härte auf, welche grösser ist als die Härte des Materials ist aus welchem die Schicht 5 sowie der Diffusor 34 hergestellt ist. Das Material aus welchem der Diffusor 34 hergestellt ist, ist wiederum härter als das Material aus welchem die Schicht 5 hergestellt ist. Falls die Schicht 5 sowie der Diffusor 34 aus Silikon hergestellt sind, so unterscheidet sich das Silikonmaterial aus welchem die Schicht 5 hergestellt ist in der Zusammensetzung vom Silikonmaterial aus welchem der Diffusor 34 hergestellt ist. So ist beispielsweise in einem ersten Fall das Silikonmaterial, aus welchem der Diffusor 34 hergestellt ist, identisch zum Silikonmaterial aus welchem die Schicht 5 hergestellt ist, wobei das Silikonmaterial aus welchem der Diffusor 34 hergestellt ist, im Vergleich zum Silikonmaterial aus welchem die Schicht 5 hergestellt ist, noch zusätzlich beispielsweise lichtstreuende Partikel aufweist. In einem zweiten Fall ist beispielsweise möglich, dass das Silikonmaterial, aus welchem der Diffusor 34 hergestellt ist, trübe und somit lichtstreuend ist, wohingegen das Silikonmaterial, aus welchem die Schicht 5 hergestellt ist, keine lichtstreuende Wirkung aufweist und somit beispielsweise klar, insbesondere glasklar, ausgebildet ist. In diesem zweiten Fall wird somit die lichtstreuende Wirkung des Diffusors 34 nicht durch beispielsweise im Diffusor 34 inkorporierte lichtstreuende Partikel erzeugt, sondern ausschliesslich durch das Silikonmaterial gewährleistet aus welchem der Diffusor 34 hergestellt ist.

Werden bei der Herstellung des Bauteiles 1 die Schicht 5 und der Diffusor 34 gefügt, so greift, aufgrund der höheren Härte des Materiales des Diffusors 34 im Vergleich zur Härte des Materiales der Schicht 5, das Dichtelement 40 des Diffusors 34 in das Material der Schicht 5 ein.

Beim Fügen des Gehäuses 8, der Schicht 5 sowie des Diffusors 34, greift das Dichtelement 41 des Gehäuses 8 in den Diffusor 34 ein und das Dichtelement 17 des Gehäuses 8 greift in die Schicht 5 ein. Dieses Eingreifen des Gehäuses 8 in den Diffusor 34 sowie die Schicht 5 findet statt, da die Härte des Materiales des Gehäuses 8 im Vergleich zur Härte des Materiales der Schicht 5 sowie des Diffusors 34 grösser ist. Durch die Dichtelemente 17, 41 ist somit das Gehäuse 8 zweifach befestigt.

Das Dichtelement 40 des Diffusors 34 greift beispielsweise in das Material der Schicht 5 ein, indem das Dichtelement 40 das Material der Schicht 5 beispielsweise verdrängt. Das Eingreifen des Dichtelementes 40 in die Schicht 5 kann aber auch erfolgen, indem beispielsweise das Dichtelement 40 das Material der Schicht 5 verdichtet oder verformt, insbesondere elastisch verformt. Das Dichtelement 17 des Gehäuses 8 greift beispielsweise in das Material der Schicht 5 ein, indem das Dichtelement 17 das Material der Schicht 5 beispielsweise verdrängt, verdichtet oder verformt, insbesondere elastisch verformt. Das Dichtelement 41 des Gehäuses 8 greift beispielsweise in das Material des Diffusors 34 ein, indem das Dichtelement 41 das Material des Diffusors 34 beispielsweise verdrängt, verdichtet oder verformt, insbesondere elastisch verformt.

Benachbart zu einer Seitenfläche 38 der Schicht 5 ist das Leuchtmittel 20 angeordnet, welches als Leuchtdiode ausgebildet ist, und geeignet ist, Licht in die Schicht 5 einzukoppeln. Das Licht pflanzt sich innerhalb der Schicht 5, insbesondere durch Totalreflexion, fort, und verlässt die Schicht 5, aufgrund von auf der Hinterseite 7 der Schicht 5 angeordneten Lichtumlenkstrukturen 61, definiert über eine Vorderseite 6 der Schicht 5, und wird anschliessend, über den Diffusor 34 sowie das flächige Dekorelement 2 von einer Sichtseite 15 des Bauteils 1 abgestrahlt. Selbstverständlich können an der Vorderseite 6 der Schicht 5 ebenfalls Lichtumlenkstrukturen 61 vorgesehen sein (nicht dargestellt). Der Diffusor 34 bewirkt, dass das aus der Schicht 5 in den Diffusor 34 eingestrahlte Licht durch den Diffusor 34 vergleichmässigt über eine Vorderseite 39 des Diffusors 34 aus dem Diffusor 34 abgestrahlt wird. In die abgeschlossenen Räume 37 und 46 können keine Verschmutzungen, wie beispielsweise Feststoffe oder Flüssigkeiten, eintreten, und somit ist eine optimale Lichtleitung innerhalb der Schicht 5 sowie eine optimale Auskoppelung von Licht aus der Schicht 5 gewährleistet.

Das Eingreifen des umlaufenden Dichtelementes 17 sowie des umlaufenden Dichtelementes 41 des Gehäuses 8 in die Schicht 5, sowie das Eingreifen des umlaufenden Dichtelementes 40 des Diffusors 34 in die Schicht 5, bewirken den Vorteil, dass allfällige Verschmutzungen, wie Feststoffe oder Flüssigkeiten, nicht, beispielsweise über den Durchbruch 27 des Gehäuses 8, in die abgeschlossenen Räume 24 und 36 des Bauteils 1 gelangen können, und somit beispielsweise die Fortpflanzung des Lichtes in der Schicht 5 stören können.

Zudem wird, aufgrund des Eingreifens des Gehäuses 8 in die Schicht 5 sowie aufgrund des Eingreifens des Diffusors 34 in die Schicht 5, das Bauteil 1 stabiler ausgebildet. Des Weiteren wird durch das Eingreifen eine Relativbewegung der Schicht 5 bezüglich des Gehäuses 8 beziehungsweise eine Relativbewegung des Gehäuses 8 bezüglich der Schicht 5, sowie eine Relativbewegung der Schicht 5 bezüglich des Diffusors 34 beziehungsweise eines Relativbewegung des Diffusors 34 bezüglich der Schicht 5, verhindert. Durch das Eingreifen der Dichtelemente 17, 40 und 41 wird somit die Gefahr der Generierung von Klappergeräuschen durch das Bauteil 1 reduziert und somit wird das Bauteil 1 geräuschemissionsärmer. Zudem kann das Bauteil 1 einfach und kostengünstig hergestellt werden, da die Schicht 5 nur noch auf den Diffusor 34 und das Gehäuse 8 nur noch auf die Schicht 5 sowie den Diffusor 34 aufgesteckt werden müssen.

Des Weiteren kann, durch die Auswahl der Härte des Materiales, aus welchem die Schicht 5 hergestellt ist, relativ zur Härte des Materiales, aus welchem das Gehäuse 8 sowie der Diffusor 34 hergestellt sind, beim Fügen der Schicht 5 und dem Gehäuse 8 der Spalt 24 definiert eingestellt werden. Durch die Auswahl der Härte des Materiales, aus welchem die Schicht 5 hergestellt ist, relativ zur Härte des Materiales, aus welchem der Diffusor 34 hergestellt sind, kann beim Fügen der Schicht 5 und dem Diffusor 34 ein Spalt 36 zwischen einer Rückseite 35 des Diffusors 34 und der Vorderseite 6 der Schicht 5 definiert eingestellt werden. Diese definierte Einstellung des Spaltes 24 und des Spaltes 36 ist insbesondere vorteilhaft, falls die Schicht 5 zur Lichtleitung vorgesehen ist und somit aus einem transluzenten Material, insbesondere aus einem transparenten Material, hergestellt ist.

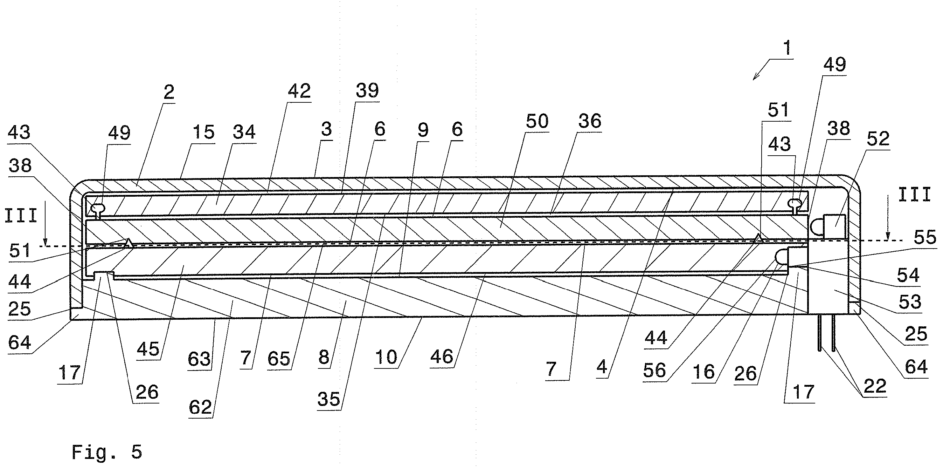

Die Figur 5 zeigt schematisch einen Längsschnitt durch eine zweite Ausführungsform eines erfindungsgemässen Bauteils. Das Bauteil 1 gemäss Figur 5 weist ein flächiges Dekorelement 2 mit einer Sichtseite 3 und einer Rückseite 4 auf, welches beispielsweise aus einem transluzenten, insbesondere transparenten, Kunststoff gefertigt ist. Möglich ist beispielsweise auch, dass das flächige Dekorelement 2 aus einer transluzenten Metallfolie hergestellt ist. An der Rückseite 4 des flächigen Dekorelementes 2 ist ein Diffusor 34 mit einer Vorderseite 39 und einer Rückseite 35 angeordnet. Die Vorderseite 39 des Diffusors 34 ist der Rückseite 4 des flächigen Dekorelementes 2 zugewandt und die Rückseite 35 des Diffusors 34 ist einer Vorderseite 6 einer ersten Schicht 50 zugewandt, welche unter unterhalb des Diffusors 34 angeordnet ist. Die erste Schicht 50 ist aus einem transluzenten, insbesondere transparenten, Material hergestellt und dient zur Lichtleitung. Wie in Figur 5 ersichtlich, ist zwischen der Rückseite 4 des flächigen Dekorelementes 2 und der Vorderseite 39 des Diffusors 34 ein Spalt 42 angeordnet und zwischen der Rückseite 35 des Diffusors 34 und der Vorderseite 6 der ersten Schicht 50 ist ein Spalt 36 vorhanden. Die erste Schicht 50 weist ein einziges, umlaufendes Dichtelement 43 auf, welches einen Hinterschnitt umfasst und, wie in Figur 5 ersichtlich, im Querschnitt beispielsweise pilzförmig ausgebildet sein kann. Der Hinterschnitt bietet den Vorteil, dass die erste Schicht 50 und der Diffusor 34 besonders gut aneinander befestigt sind. Das Dichtelement 43 greift in eine Vertiefung 49 des Diffusors 34 ein.

Unterhalb der ersten Schicht 50 ist eine zweite Schicht 45 mit einer Vorderseite 6 und einer Hinterseite 7 angeordnet, wobei zwischen der Vorderseite 6 der zweiten Schicht 5 und Hinterseite 7 der ersten Schicht 50 ein Spalt 65 vorhanden ist. Die zweite Schicht 45 ist wiederum aus einem transluzenten, insbesondere transparenten, Material hergestellt und dient zur Lichtleitung. Das Material der ersten Schicht 50 sowie das Material der zweiten Schicht 45 bilden gemeinsam eine Gruppe von ersten Materialien.

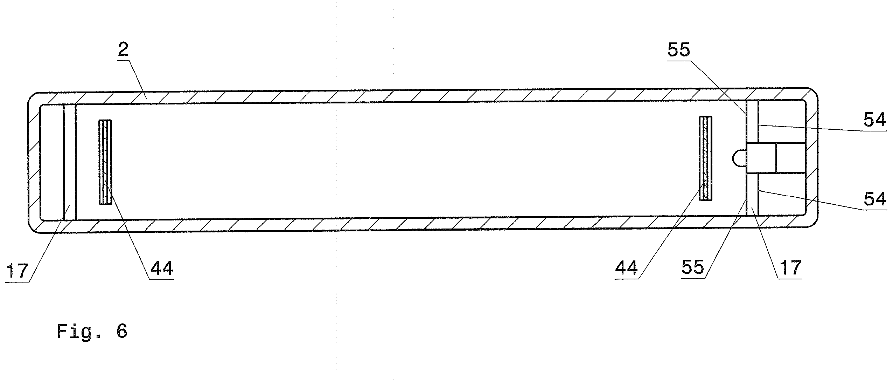

Zwei Dichtelemente 44 der zweiten Schicht 45, welche, wie in Figur 5 erkennbar, beispielsweise im Querschnitt dreiecksförmig ausgebildet sein können, greifen in das Material der ersten Schicht 50 beziehungsweise in jeweils eine Vertiefung 51 der ersten Schicht 50 ein. Die Figur 6 zeigt schematisch eine Draufsicht auf einen Querschnitt entlang der Linie III-III durch das Bauteil gemäss Figur 5. Anhand der Figur 6 ist erkennbar, dass die zwei Dichtelemente 44 parallel einander gegenüberliegen und sich jeweils über einen Teil der Breite der ersten Schicht 50 erstrecken.

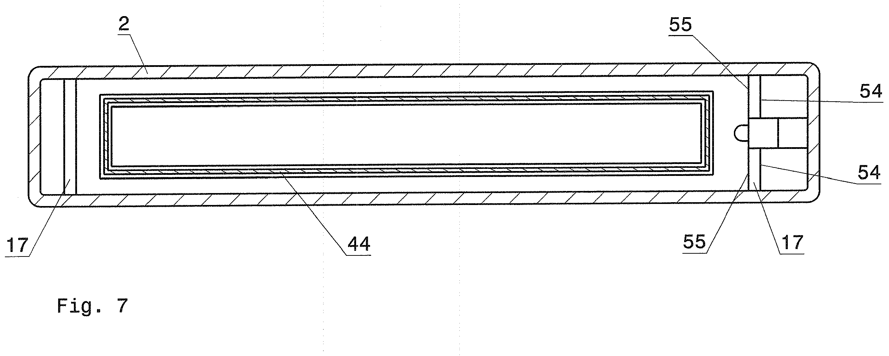

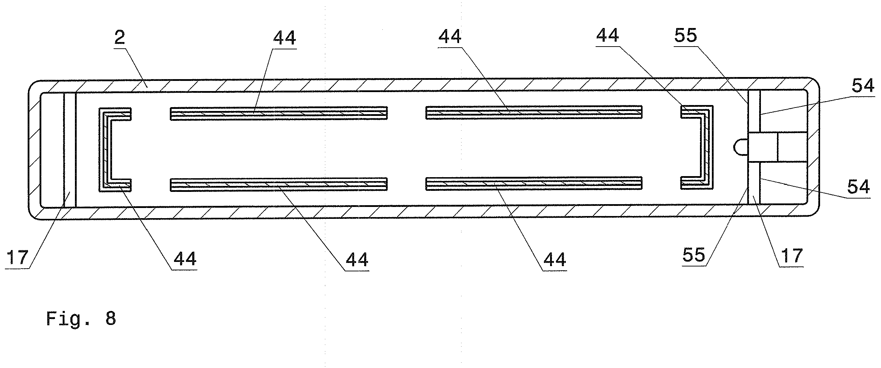

Gemäss einer ersten Variante kann die zweite Schicht 45, anstatt der beiden Dichtelemente 44, ein einziges, umlaufendes Dichtelement 44 aufweisen, welches in Figur 7 dargestellt ist. Die Figur 7 zeigt schematisch eine Draufsicht auf einen Querschnitt entlang der Linie III-III durch eine erste Variante des Bauteils 1 gemäss Figur 5. Gemäss einer zweiten Variante kann die erste Schicht 50 mehrere voneinander beabstandete Dichtelemente 44 aufweisen, welche gemeinsam ein umlaufendes Dichtelement mit Unterbrüchen bilden. Die genannten Dichtelemente 44 sind in Figur 8 ersichtlich, welche Figur 8 schematisch eine Draufsicht auf einen Querschnitt entlang der Linie III-III durch eine zweite Variante des Bauteils 1 gemäss Figur 5 zeigt. Die Dichtelemente 44 gemäss den Figuren 7 und 8 sind jeweils im Querschnitt dreieckförmig ausgebildet.

Das Bauteil 1 gemäss Figur 5 weist ein Gehäuse 8 mit einer Innenseite 9 und einer Aussenseite 10 auf. Das Gehäuse 8 ist aus einem zweiten Material hergestellt, dessen Härte unterschiedlich ist zu den Härten der jeweiligen ersten Materialien. Wie in Figur 6 ersichtlich, umfasst das Gehäuse 8 des Bauteils 1 gemäss Figur 5 zwei einander parallel gegenüberliegende Dichtelemente 17, welche sich über fast die gesamte Breite des Gehäuses 8 erstrecken sowie dicht an die Innenseite 9 des flächigen Dekorelementes 2 angrenzen. Gemäss Figur 5 greift jedes der zwei Dichtelemente 17 in jeweils eine Vertiefung 26 in der zweiten Schicht 45 ein. Im Querschnitt gesehen sind die Dichtelemente 17 rechteckförmig ausgebildet. Die Rückseite 4 des flächigen Dekorelementes 2, die Hinterseite 7 der zweiten Schicht 45 sowie die Innenseite 9 des Gehäuses 8 begrenzen gemeinsam einen geschlossenen Raum 46. Das Gehäuse 8 ist über die Innenseite 9 an einer umlaufenden Stirnseite 25 des flächigen Dekorelementes 2 befestigt.

Das Material, aus welchem die erste Schicht 50 hergestellt ist, weist eine grössere Härte auf als das Material, aus welchem der Diffusor 34 hergestellt ist. Das Material, aus welchem die zweite Schicht 45 hergestellt ist, weist wiederum eine grössere Härte auf als das Material, aus welchem die erste Schicht 50 hergestellt ist, und das Material, aus welchem das Gehäuse 8 hergestellt ist, weist wiederum eine grössere Härte auf als das Material, aus welchem die zweite Schicht 45 hergestellt ist. Der Diffusor 34, die erste Schicht 50 sowie die zweite Schicht 45 sind bevorzugt aus Silikon, insbesondere aus Silikonkautschuk, hergestellt. Bevorzugt weist das Material, wie beispielsweise des Silikons, aus welchem der Diffusor 34, die erste Schicht 50 sowie die zweite Schicht 45 hergestellt sind, eine Shore-A-Härte im Bereich von 5-90 auf, welche bevorzugt gemäss der Norm DIN ISO 7619-1 vom Februar 2012 gemessen ist. Da der Diffusor 34, die erste Schicht 50 und die zweite Schicht 45 eine unterschiedliche Härte aufweisen, ist die Zusammensetzung des Materiales, wie beispielsweise des Silikons, aus welchem der Diffusor 34, die erste Schicht 50 sowie die zweite Schicht 45 hergestellt sind, unterschiedlich. Das Material, aus welchem das Gehäuse 8 hergestellt ist, umfasst bevorzugt wenigstens einen Thermoplasten und weist bevorzugt eine Härte im Bereich von 10-200 N/mm² auf, welche vorzugsweise gemäss der Norm DIN EN ISO 2039-1 vom Juni 2003 gemessen ist.

Aufgrund der grösseren Härte der ersten Schicht 50 gegenüber dem Diffusor 34 kann beim Fügen der ersten Schicht 50 und dem Diffusor 34 die erste Schicht 50 in den Diffusor 34 eingreifen. Beim Fügen wird das Material des Diffusors 34 durch das Material der ersten Schicht 50 beispielsweise verdrängt, verdichtet oder verformt, insbesondere elastisch verformt. Das im Zusammenhang mit dem Fügen der ersten Schicht 50 und dem Diffusor 34 Gesagte, gilt analog auch für das Fügen der zweiten Schicht 45 mit der ersten Schicht 50 sowie für das Fügen des Gehäuses 8 mit der zweiten Schicht 45.

Wie in Figur 5 erkennbar, weist das Bauteil 1 ein erstes Leuchtmittel 52 auf, welches als Leuchtdiode ausgebildet ist, auf, wobei das Leuchtmittel 52 benachbart zu einer Seitenfläche 38 der ersten Schicht 50 angeordnet ist zum Einkoppeln von Licht in die erste Schicht 50. Das Bauteil 1 weist zudem ein unterhalb des ersten Leuchtmittels 52 angeordnetes zweites Leuchtmittel 53 auf, welches als Leuchtdiode ausgebildet ist, auf, wobei das Leuchtmittel 53 teilweise in einer Vertiefung 16 der zweiten Schicht 45 angeordnet ist. Über ein Stromübertragungselement 22 des Bauteils 1, welches als zwei Anschlusskabel ausgebildet ist, wird dem ersten Leuchtmittel 52 und dem zweiten Leuchtmittel 53 elektrischer Strom zugeführt.

Wie in Figur 5 ersichtlich, ist das benachbart zu den Leuchtmittel 52, 53 angeordnete Dichtelement 17 unterhalb des Leuchtmittels 53 angeordnet. Hierdurch ist die Gefahr vermindert, dass vom Leuchtmittel 53 in die zweite Schicht 45 eingekoppeltes Licht bei dessen Fortpflanzung innerhalb der zweiten Schicht 45 durch das unterhalb des Leuchtmittels 53 angeordnete Dichtelement 17 gestört wird. Insbesondere ist in der Figur 5 erkennbar, dass das unterhalb des zweiten Leuchtmittel 53 angeordnete Dichtelement 17 eine äusserste Kante 54 sowie eine innerste Kante 55 aufweist, wobei die äusserste Kante 54 der Rückseite 4 des flächigen Dekorelemente 2 zugewandt ist. Das zweite Leuchtmittel 53 weist eine lichtemittierende Oberfläche 56 auf, wobei diese Oberfläche 56 derart zur innersten Kante 55 angeordnet ist, so dass das von der Oberfläche 56 emittierte Licht in einen Bereich der zweiten Schicht 45 eingestrahlt wird, welcher sich von der innersten Kante 55 in eine von der äussersten Kante 54 abgewandte Richtung wegerstreckt. Dies bietet den Vorteil, dass das in der zweiten Schicht 45 sich fortpflanzende Licht nicht durch das unterhalb des Leuchtmittel 53 angeordnete Dichtelement 17 gestört wird.

Die vorstehende Erfindung ist selbstverständlich nicht auf die beschriebenen Ausführungsformen beschränkt, und eine Vielzahl von Abwandlungen ist möglich.

Beispielsweise kann das Bauteil 1 gemäss der Figur 1, anstatt einer an die Rückseite 4 des flächigen Dekorelementes 2 sowie der Folie 13 angegossenen Schicht 5, eine Schicht 5' aufweisen, in welcher ein Leuchtmittel 20 oder ein Beleuchtungsmodul 18 vollständig eingebettet ist, und welche unmittelbar unterhalb der Folie 13 angeordnet ist, so dass zwischen der Schicht 5' und der Rückseite 4 des flächigen Dekorelementes 2 sowie der Folie 13 ein Spalt, welcher bevorzugt Luft enthält, angeordnet ist. Dieser Spalt ist insbesondere vorteilhaft, falls die Schicht 5' zur Leitung von Licht vorgesehen ist.

An der Hinterseite 7 der Schicht 5 des Bauteils gemäss Figur 1 oder an der Vorderseite 6 und / oder der Hinterseite 7 der Schicht 5' können Lichtumlenkstrukturen 61 vorgesehen sein. Ebenfalls können an der Vorderseite 6 und / oder der Hinterseite 7 der ersten Schicht 50 und / oder an der Vorderseite 6 und / oder der Hinterseite 7 der zweiten Schicht 45 des Bauteils 1 gemäss Figur 5 auch Lichtumlenkstrukturen 61 vorgesehen sein. Anstatt der auf den genannten Schichten 5, 5', 45, 50 angeordneten Lichtumlenkstrukturen 61 können beispielsweise auch Lichtumlenkstrukturen in die Schichten 5, 5', 45, 50 eingearbeitet sein. Die eingearbeiteten Lichtumlenkstrukturen sind weniger beschädigungsanfällig. Eine Vielzahl weiterer Abwandlungen ist möglich.

**BEZUGSZEICHENLISTE**

| | | | |
|---|---|---|---|
| 1 | Bauteil | 28 | Eingangsöffnung |
| 2 | flächiges Dekorelement | 29 | Ausgangsöffnung |
| 3 | Sichtseite des flächigen Dekorelementes 2 | 30 | Oberfläche |
| | | 31 | Grundkörper |
| 4 | Rückseite des flächigen Dekorelementes 2 | 32 | Befestigungselement |
| | | 33 | Abschnitt des Dichtelementes 17 |
| 5 | Schicht | | |
| 6 | Vorderseite | 34 | Diffusor |
| 7 | Hinterseite | 35 | Rückseite des Diffusors 34 |
| 8 | Gehäuse | 36 | Spalt |
| 9 | Innenseite des Gehäuses 8 | 37 | Raum |
| 10 | Aussenseite des Gehäuses 8 | 38 | Seitenfläche |
| 11 | erster Durchbruch | 39 | Vorderseite des Diffusors 34 |
| 12 | zweiter Durchbruch | 40 | Dichtelement des Diffusors 34 |
| 13 | Folie | | |
| 14 | Teilbereich der Aussenseite 1 0 des Gehäuses 8 | 41 | Weiteres Dichtelement des Gehäuses 8 |
| 15 | Sichtseite des Bauteil 1 | 42 | Spalt |
| 16 | Vertiefung | 43 | Dichtelement |
| 17 | Dichtelement | 44 | Dichtelement |
| 18 | Beleuchtungsmodul | 45 | zweite Schicht |
| 19 | Träger | 46 | Raum |
| 20 | Leuchtmittel | 47 | Vertiefung |
| 21 | Vorderseite des Trägers 19 | 48 | Vertiefung |
| 22 | Stromübertragungselement | 49 | Vertiefung des Diffusors 34 |
| 23 | Durchgang | 50 | erste Schicht |
| 24 | Spalt | 51 | Vertiefung der ersten Schicht 50 |
| 25 | Stirnseite des flächigen Dekorelementes 2 | | |
| | | 52 | erstes Leuchtmittel |
| 26 | Vertiefung | 53 | zweites Leuchtmittel |
| 27 | Durchbruch des Gehäuses 8 | 54 | äusserste Kante |
| 55 | innerste Kante | H | Höhe des Dichtelementes 17 |
| 56 | lichtemittierende Oberfläche | D | Dicke der Schicht 5 |
| 57 | Rückseite des Bauteils 1 | S | Höhe des Spaltes 24 |
| 58 | Randbereich der Schicht 5 | | |
| 59 | Raum | | |
| 60 | Rückseite des Trägers 19 | | |
| 61 | Lichtumlenkstrukturen | | |
| 62 | Rückwand | | |
| 63 | Rückseite | | |
| 64 | Seitenwand | | |
| 65 | Spalt | | |

## Patentansprüche

1. Bauteil (1) umfassend
- ein flächiges Dekorelement (2) mit einer Sichtseite (3) und einer Rückseite (4),
- eine aus einem ersten Material hergestellte Schicht (5, 5') oder mehrere aus ersten Materialien hergestellte Schichten (5, 5'), wobei die eine oder mehreren Schichten (5, 5') jeweils an der Rückseite (4) des flächigen Dekorelementes (2) angeordnet sind und jeweils eine Vorderseite (6) und eine Hinterseite (7) aufweisen, wobei die Vorderseite (6) jeweils der Rückseite (4) des flächigen Dekorelementes (2) zugewandt ist,
- ein aus einem zweiten Material hergestelltes Gehäuse (8) mit einer Innenseite (9) und einer Aussenseite (10), wobei die Innenseite (9) den jeweiligen Hinterseiten (7) der einen oder mehreren Schichten (5) zugewandt ist,
- wenigstens ein Leuchtmittel (20) zur Einkopplung von Licht in zumindest eine der einen oder mehreren Schichten (5,5'), sowie
- wenigstens ein Stromübertragungselement (22) zur Versorgung des Leuchtmittels (20) mit elektrischem Strom,
wobei das oder die ersten Materialien Härten aufweisen, die jeweils unterschiedlich zur Härte des zweiten Materiales sind,
wobei das Gehäuse (8) in wenigstens eine Vertiefung (26) eingreift, die in einer der einen oder mehreren Schichten (5, 5') angeordnet ist,
und wobei das Gehäuse (8) wenigstens einen Durchbruch (27) aufweist, wobei die Innenseite (9) des Gehäuses (8) eine Eingangsöffnung (28) des Durchbruches (27) und die Aussenseite (10) des Gehäuses (8) eine Ausgangsöffnung (29) des Durchbruches (27) bildet, wobei das Stromübertragungselement (22) sich wenigstens durch den Durchbruch (27) hindurch von der Innenseite (9) zur Aussenseite (10) des Gehäuses (8) erstreckt,
**dadurch gekennzeichnet, dass**
das Gehäuse (8) auf der Innenseite (9) ein in Richtung der Hinterseiten (7) der einen oder mehreren Schichten (5, 5') gerichtetes Dichtelement (17) aufweist, wobei das Dichtelement (17) in die Vertiefung (26) bzw. in eine der Vertiefungen (26) eingreift, wobei das Dichtelement (17) wenigstens teilweise, bevorzugt vollständig, die Eingangsöffnung (28) des Durchbruches (27) bildet.

2. Bauteil (1) nach Anspruch 1, **dadurch gekennzeichnet, dass** das zweite Material eine Härte aufweist, welche grösser als die Härten der oder der ersten Materialien ist.

3. Bauteil (1) nach Anspruch 1 oder 2, **dadurch gekennzeichnet, dass** die eine oder mehreren Schichten (5, 5') jeweils aus einem transluzenten Material, insbesondere transparenten Material, hergestellt sind.

4. Bauteil (1) nach einem der vorangehenden Ansprüche, **dadurch gekennzeichnet, dass** die eine oder mehreren Schichten (5, 5') jeweils aus Silikon, insbesondere Silikonkautschuk, oder PMMA-Block-Copolymer, bevorzugt aus Silikon, insbesondere Silikonkautschuk, hergestellt sind.

5. Bauteil (1) nach einem der vorangehenden Ansprüche, **dadurch gekennzeichnet, dass** das Leuchtmittel (20) wenigstens teilweise, bevorzugt vollständig, in einer der einen oder mehreren Schichten (5, 5') eingebettet ist.

6. Bauteil (1) nach einem der vorangehenden Ansprüche, **dadurch gekennzeichnet, dass** das Leuchtmittel (20) zwischen der Rückseite (4) des flächigen Dekorelementes (2) und der Innenseite (9) des Gehäuses (8) angeordnet ist.

7. Bauteil (1) nach einem der vorangehenden Ansprüche, **dadurch gekennzeichnet, dass** das zweite Material, aus welchem das Gehäuse (8) hergestellt ist, eine Kugeleindruckhärte im Bereich von 10-200 N/mm² aufweist, wobei die Kugeleindruckhärte gemäss der Norm DIN EN ISO 2039-1 vom Juni 2003 gemessen ist, und wobei das oder die ersten Materialien, aus welchen die eine oder mehreren Schichten (5, 5') hergestellt sind, jeweils eine Shore-A-Härte im Bereich von 5-90 aufweisen, wobei die Shore-A-Härte gemäss der Norm DIN ISO 7619-1 vom Februar 2012 gemessen ist.

8. Bauteil (1) nach einem der vorangehenden Ansprüche, **dadurch gekennzeichnet, dass** das oder die ersten Materialen, aus welchen die eine oder mehreren Schichten (5, 5') hergestellt sind, jeweils durch das zweite Material, aus welchem das Gehäuse (8) hergestellt ist, verdrängbar und / oder verdichtbar und / oder verformbar, insbesondere elastisch verformbar, sind.

9. Bauteil (1) nach einem der vorangehenden Ansprüche, **dadurch gekennzeichnet, dass** das Gehäuse (8) an einer der Sichtseite (3) des flächigen Dekorelementes (2) gegenüberliegenden Seite des Bauteils (1) eine Rückwand (62) des Bauteils (1) bildet, wobei die Rückwand (62) bevorzugt eine Rückseite (63) des Bauteils (1) bildet, und wobei das Gehäuse (8) bevorzugt wenigstens eine zwischen der Sichtseite (3) des flächigen Dekorelementes (2) und der Rückseite (63) des Bauteils (1) angeordnete Seitenwand (64) des Bauteils (1) bildet.

10. Bauteil (1) nach einem der vorangehenden Ansprüche, **dadurch gekennzeichnet, dass** das Gehäuse (8) aus einem lichtundurchlässigen Material hergestellt ist.

11. Bauteil (1) nach einem der vorangehenden Ansprüche, **dadurch gekennzeichnet, dass** wenigstens eine der einen oder mehreren Schichten als Diffusor (34) ausgebildet ist.

## Claims

1. A component (1) comprising
- a two-dimensionally extending decorative element (2) having a visible side (3) and a back side (4),
- a layer (5, 5') produced from a first material or a plurality of layers (5, 5') produced from first materials, wherein the one or more layers (5, 5') is/are each arranged on the back side (4) of the two-dimensionally extending decorative element (2) and each has a front side (6) and a rear side (7), wherein the front side (6) in each case faces the back side (4) of the two-dimensionally extending decorative element (2), and
- a housing (8) produced from a second material and having an inner side (9) and an outer side (10), wherein the inner side (9) faces the respective rear sides (7) of the one or more layers (5),
- at least one lighting element (20) for coupling light into at least one of the one or more layers (5, 5') and
- at least one electric power transmission element (22) for supplying the lighting element (20) with electric power,
wherein the first material or materials has/have hardnesses which are in each case different to the hardness of the second material,
wherein the housing (8) engages in at least one recess (26), which is arranged in one of the one or more layers (5, 5'),
and wherein the housing (8) has at least one aperture (27), wherein the inner side (9) of the housing (8) forms an inlet opening (28) of the aperture (27) and the outer side (10) of the housing (8) forms an outlet opening (29) of the aperture (27), wherein the electric power transmission element (22) extends at least through the aperture (27) from the inner side (9) to the outer side (10) of the housing (8),
**characterized in that**
the housing (8) has, on the inner side (9), a sealing element (17) pointing in the direction of the rear sides (7) of the one or more layers (5, 5'), wherein the sealing element (17) engages in the recess (26) or in one of the recesses (26), wherein the sealing element (17) at least partially, preferably completely, forms the inlet opening (28) of the aperture (27).

2. The component (1) as claimed in claim 1, **characterized in that** the second material has a hardness which is greater than the hardnesses of the first material or materials.

3. The component (1) as claimed in claim 1 or 2, **characterized in that** the one or more layers (5, 5') is/are in each case produced from a translucent material, in particular a transparent material.

4. The component (1) as claimed in one of the preceding claims, **characterized in that** the one or more layers (5, 5') is/are in each case produced from silicone, in particular silicone rubber, or PMMA block copolymer, preferably from silicone, in particular silicone rubber.

5. The component (1) as claimed in one of the preceding claims, **characterized in that** the lighting element (20) is embedded at least partially, preferably completely, in one of the one or more layers (5, 5').

6. The component (1) as claimed in one of the preceding claims, **characterized in that** the lighting element (20) is arranged between the back side (4) of the two-dimensionally extending decorative element (2) and the inner side (9) of the housing (8).

7. The component (1) as claimed in one of the preceding claims, **characterized in that** the second material, from which the housing (8) is produced, has a ball impression hardness in the range of 10-200 N/mm², wherein the ball impression hardness is measured in accordance with DIN EN ISO 2039-1, June 2003, and wherein the first material or materials, from which the one or more layers (5, 5') is/are produced, in each case has/have a Shore A hardness in the range of 5-90, wherein the Shore A hardness is measured in accordance with DIN ISO 7619-1, February 2012.

8. The component (1) as claimed in one of the preceding claims, **characterized in that** the first material or materials, from which the one or more layers (5, 5') is/are produced, can be displaced and/or compressed and/or deformed, in particular elastically deformed, by the second material, from which the housing (8) is produced.

9. The component (1) as claimed in one of the preceding claims, **characterized in that** the housing (8) forms a back wall (62) of the component (1) on an opposite side of the component (1) from the visible side (3) of the two-dimensionally extending decorative element (2), wherein the back wall (62) preferably forms a back side (63) of the component (1), and wherein the housing (8) preferably forms at least one side wall (64) of the component (1), which is arranged between the visible side (3) of the two-dimensionally extending decorative element (2) and the back side (63) of the component (1).

10. The component (1) as claimed in one of the preceding claims, **characterized in that** the housing (8) is produced from an opaque material.

11. The component (1) as claimed in one of the preceding claims, **characterized in that** at least one of the one or more layers is designed as a diffuser (34).

## Revendications

1. Composant (1) comprenant
- un élément décoratif plat (2) avec une face visible (3) et une face arrière (4),
- une couche (5, 5') réalisée à partir d'un premier matériau ou plusieurs couches (5, 5') réalisées à partir de premiers matériaux, dans lequel l'une ou les couches (5, 5') sont disposées chacune à la face arrière (4) de l'élément décoratif plat (2) et présentent chacune une face avant (6) et une face arrière (7), dans lequel, respectivement, la face avant (6) fait face à la face arrière (4) de l'élément décoratif (2) plat, et
- un boîtier (8) réalisé à partir d'un deuxième matériau avec une face intérieure (9) et une face extérieure (10), dans lequel la face intérieure (9) fait face aux faces arrière respectives (7) de l'une ou des plusieurs couches (5),
- au moins un moyen d'éclairage (20) pour coupler la lumière dans au moins une de l'une ou des plusieurs couches (5, 5') ainsi que
- au moins un élément de transmission de courant (22) pour l'alimentation du moyen d'éclairage (20) en courant électrique,
dans lequel le ou les premiers matériaux présentent des duretés qui sont chacune différentes de la dureté du deuxième matériau,
dans lequel le boîtier (8) vient s'engager dans au moins un renfoncement (26), qui est agencé dans une de l'une ou des plusieurs couches (5, 5'),
et dans lequel le boîtier (8) présente au moins une percée (27), dans lequel la face intérieure (9) du boîtier (8) forme une ouverture d'entrée (28) de la percée (27) et la face extérieure (10) du boîtier (8) forme une ouverture de sortie (29) de la percée (27), dans lequel l'élément de transmission de courant (22) s'étend au moins à travers la percée (27) depuis la face intérieure (9) jusqu'à la face extérieure (10) du boîtier (8), **caractérisé en ce que**
le boîtier (8) présente sur la face intérieure (9) un élément d'étanchéité (17) orienté en direction des faces arrière (7) de la ou des plusieurs couches (5, 5'), dans lequel l'élément d'étanchéité (17) vient s'engager dans le renfoncement (26) respectivement un des renfoncements (26), dans lequel l'élément d'étanchéité (17) au moins partiellement, de préférence complètement, forme l'ouverture d'entrée (28) de la percée (27).

2. Composant (1) selon la revendication 1, **caractérisé en ce que** le deuxième matériau a une dureté supérieure aux duretés du ou des premiers matériaux.

3. Composant (1) selon la revendication 1 ou 2, **caractérisé en ce que** la ou les couches (5, 5') sont chacune produites à partir d'un matériau translucide, en particulier à partir d'un matériau transparent.

4. Composant (1) selon l'une des revendications précédentes, **caractérisé en ce que** la ou les plusieurs couches (5, 5') sont chacune en silicone, en particulier en caoutchouc silicone, ou en copolymère à blocs PMMA, de préférence en silicone, en particulier en caoutchouc silicone.

5. Composant (1) selon l'une des revendications précédentes, **caractérisé en ce que** le moyen d'éclairage (20) est au moins partiellement, de préférence complètement, encastré dans une de l'une ou des plusieurs couches (5, 5').

6. Composant (1) selon l'une des revendications précédentes, **caractérisé en ce que** le moyen d'éclairage (20) est disposé entre la face arrière (4) de l'élément décoratif plat (2) et de la face intérieure (9) du boîtier (8).

7. Composant (1) selon l'une des revendications précédentes, **caractérisé en ce que** le deuxième matériau, à partir duquel le boîtier (8) est réalisé, présente une dureté à la bille dans la plage de 10 à 200 N / mm², dans lequel la dureté à la bille est mesurée conformément à la norme DIN EN ISO 2039-1 de juin 2003, et dans lequel le ou les premier matériaux à partir desquels l'une ou les plusieurs couches (5, 5') sont réalisées présentent chacune une dureté Shore-A dans la plage de 5-90, dans lequel la dureté Shore-A est mesurée conformément à la norme DIN ISO 7619-1 de février 2012.

8. Composant (1) selon l'une des revendications précédentes, **caractérisé en ce que** le ou les premiers matériaux, à partir desquels l'une ou les plusieurs couches (5, 5') sont réalisées, sont chacun déplaçables et / ou compressibles et / ou déformables, en particulier élastiquement déformables, par le deuxième matériau, à partir duquel le boîtier (8) est réalisé.

9. Composant (1) selon l'une des revendications précédentes, **caractérisé en ce que** le boîtier (8) forme une paroi arrière (62) du composant (1) sur une face du composant (1) opposée à la face visible (3) de l'élément décoratif plat (2), dans lequel la paroi arrière (62) forme de préférence une face arrière (63) du composant (1), et dans lequel le boîtier (8) forme de préférence au moins une paroi latérale (64) du composant (1) disposée entre la face visible (3) de l'élément décoratif plat (2) et la face arrière (63) du composant (1).

10. Composant (1) selon l'une des revendications précédentes, **caractérisé en ce que** le boîtier (8) est réalisé à partir d'un matériau non translucide à la lumière.

11. Composant (1) selon l'une des revendications précédentes, **caractérisé en ce qu'**au moins une de l'une ou des plusieurs couches est réalisée en tant que diffuseur (34).
